# EUROPEAN PATENT APPLICATION

(11) **EP 4 836 120 A1**
(43) Date of publication of application: **04.11.2026**
(21) Application number: 24914569.9
(22) Date of filing: 03.01.2024
(51) Int. Cl.: H01M 50/204, H01M 10/60

(54) **BATTERY AND ELECTRICAL APPARATUS**

(71) Applicant: Contemporary Amperex Technology Co., Limited, Ningde, Fujian 352100 (CN)
(72) Inventor: YUAN, Shenggang, Ningde, Fujian 352100 (CN); WANG, Zengzhong, Ningde, Fujian 352100 (CN); WANG, Peng, Ningde, Fujian 352100 (CN); JIA, Jun, Ningde, Fujian 352100 (CN); NIU, Jianxin, Ningde, Fujian 352100 (CN)
(74) Representative: Gong, Jinping
(86) International application number: PCT/CN2024/070393
(87) International publication number: WO 2025/145336

(57) **Abstract**

A battery (1001) and an electrical apparatus. The battery (1001) comprises: a case (200), comprising first borders (2021) located at both ends in the width direction, each first border (2021) extending in the length direction of the case (200); and a plurality of cells (100), mounted inside the case (200), the length direction of each cell (100) being parallel to the length direction of the case (200), the cells (100) adjacent to each first border (2021) abutting against the first border (2021), and each first border (2021) being provided with a mounting beam (23). The length direction of the cells (100) is parallel to the length direction of the case (200), each first border (2021) abuts against the adjacent cells (100), and the first borders (2021) are located at the ends of the case (200) in the width direction, such that each first border (2021) abuts against large surfaces of the adjacent cells (100). Moreover, the first borders (2021) being provided with the mounting beams (23) facilitates mounting and use of the battery (1001), and the mounting beams (23) can provide constraining forces, so as to resist the expansion deformation of the cells (100).

## Description

### TECHNICAL FIELD

The present application relates to the technical field of batteries, and in particular, to a battery cell and an electric device.

### BACKGROUND

Energy conservation and emission reduction is the key to sustainable development of the automobile industry. Electric vehicles have become an important part of the sustainable development of the automobile industry due to their advantages of energy saving and environmental protection. For electric vehicles, the battery technology is an important factor in their development. However, when a battery is charged and discharged, the battery cells will expand and deform and thereby fail, and effective resistance to the expansion and deformation of the battery cells is a problem that needs to be solved in battery production.

### SUMMARY

The objective of embodiments of the present application is to provide a battery and an electric device to solve the problem of how to resist the expansion and deformation of battery cells in the related art.

In a first aspect, the embodiments of the present application provide a battery. The battery includes:
a case including first frames at two ends in a width direction, each first frame extending along a length direction of the case; and
a plurality of battery cells mounted in the case;
a length direction of each battery cell is parallel to the length direction of the case, and battery cells adjacent to the first frames abut against the first frames;
a load-bearing beam is disposed on each first frame.

In the technical solutions of the embodiments of the present application, by allowing the length direction of the battery cell to be parallel to the length direction of the case, allowing the first frames to abut against the adjacent battery cells, and allowing the first frames to be located at the end parts of the case in the width direction, the first frames abut against the large surfaces of the adjacent battery cells. By providing the load-bearing beam on the first frame, the mounting and use of the battery is facilitated, and a constraining force can be provided by the load-bearing beam to resist the expansion and deformation of the battery cells.

In some embodiments, two ends of the battery cell along the height direction respectively have a first end surface and a second end surface, and the second end surface is adhesively connected to the case.

The second end surface is adhesively connected to the case to fix the battery cell, such that the case can stably support the battery cell.

In some embodiments, the second end surface is fixedly connected to the case through a structural adhesive.

The second end surface of the battery cell is fixedly connected to the case through a structural adhesive, such that a plurality of battery cells can be connected into a single unit to improve the overall structural strength of the battery, thus effectively resisting the expansion and deformation of the battery cells, reducing the risk of failure of the battery cells due to expansion and deformation, and improving the overall structural strength of the battery.

In some embodiments, the battery further includes:
an adhesive blocking structure disposed around an edge of each second end surface and configured to prevent the structural adhesive on the second end surface from flowing into a gap between adjacent battery cells.

Providing the adhesive blocking structure and allowing the adhesive blocking structure to surround the edge of each second end surface can prevent the structural adhesive from overflowing to the side surface of the battery cell, so as to reduce the risk of a situation where the presence of cured structural adhesive between adjacent battery cells affects the normal expansion and deformation of battery cells during charging and discharging and thereby the service life of the battery cells is shortened.

In some embodiments, the adhesive blocking structure includes a ridge-like strip disposed on the case and/or the second end surface.

By using the ridge-like strip as the adhesive blocking structure, the structure is simple, thus facilitating the processing and manufacturing. In addition, when the case is connected to the second end surface, the adhesive blocking structure can be located between the case and the second end surface, thus facilitating the assembly.

In some embodiments, a thermal management component is mounted in the case, and the thermal management component is in heat conducting connection with the battery cell.

By providing the thermal management component and allowing it to be in heat conducting connection with the battery cell to heat or cool the battery cell through the thermal management component, a stable temperature environment of the battery cell can be improved, thus facilitating stable charging and discharging of the battery cell.

In some embodiments, one end of each battery cell along the height direction has a first end surface, and the first end surface is provided with an electrode terminal. The thermal management component includes a first thermal management component, each first end surface is adhesively connected and fixed to the first thermal management component through a thermally conductive structural adhesive, and the first thermal management component is provided with first holes exposing the electrode terminals.

The first end surfaces of the battery cells are adhesively connected and fixed to the first thermal management component through the thermally conductive structural adhesive, such that the first end surfaces of the battery cells are fixed through the first thermal management component, and thereby the plurality of battery cells are connected into a single unit, thus improving the overall structural strength of the battery, effectively resisting the expansion and deformation of the battery cells, and reducing the risk of failure of the battery cells due to expansion and deformation; moreover, the battery cells may be heated or cooled through the first thermal management component, such that the temperature environment of the battery cells is more stable; allowing the first thermal management component to be adhesively connected and fixed to the first end surfaces can effectively save the height space in the battery and is conducive to improving the energy density and volume utilization rate of the battery.

In some embodiments, the battery further includes:
an adhesive stopping structure, disposed around an edge of each first end surface;
the adhesive stopping structure is disposed between the battery cell and the first thermal management component.

Providing the adhesive stopping structure and allowing the adhesive stopping structure to surround the edge of each first end surface can prevent the thermally conductive structural adhesive from overflowing to the side surface of the battery cell, so as to reduce the risk of a situation where the presence of cured thermally conductive structural adhesive between adjacent battery cells affects the normal expansion and deformation of battery cells during charging and discharging and thereby the service life of the battery cells is shortened.

In some embodiments, the adhesive stopping structure is further disposed around each first hole.

Allowing the adhesive stopping structure to surround each first hole can prevent the thermally conductive structural adhesive from overflowing to the first hole, thus reducing the risk of affecting the connection between the electrode terminal and the busbar member due to the overflow of the thermally conductive structural adhesive to the first hole.

In some embodiments, the first end surface is provided with a pressure relief mechanism, the first thermal management component is provided with venting mechanisms respectively opposite to the pressure relief mechanisms, and the adhesive stopping structure is disposed around each venting mechanism.

The pressure relief mechanism is provided on the first end surface, such that the internal pressure of the battery cell can be relieved during the transitional expansion of the battery cell, so as to protect the battery cell. A second hole is provided on the first thermal management component to allow for pressure relief of the pressure relief mechanism. The adhesive stopping structure surrounds the venting mechanism to prevent the thermally conductive structural adhesive from overflowing to the venting mechanism, reducing the risk of affecting the opening of the pressure relief mechanism for pressure relief.

In some embodiments, the venting mechanism is a second hole disposed on the first thermal management component, and an inner wall of the second hole is provided with an insulating layer.

By using the second hole as the venting mechanism, the structure is simple. By providing an insulating layer on the inner wall of the second hole, the risk of affecting the creepage distance between the busbar member and the battery cell due to the conductivity of the inner wall of the second hole can be reduced, thereby improving the safety of the battery.

In some embodiments, the adhesive stopping structure includes a rib-like strip disposed on the first thermal management component and/or the first end surface.

By using the rib-like strip as the adhesive stopping structure, the structure is simple, thus facilitating the processing and manufacturing. In addition, when the first thermal management component is connected to the first end surface, the adhesive stopping structure may be located between the first thermal management component and the first end surface, thus facilitating the assembly.

In some embodiments, two opposite surfaces of the first thermal management component and the inner wall of the first hole are provided with an insulating layer.

By providing the insulating layer on two surfaces of the first thermal management component and the inner wall of the first hole, an insulating protection effect can be achieved, thereby reducing the risk of short circuits of the battery cell.

In some embodiments, one end of the battery cell along the height direction has a second end surface, and the thermal management component includes a second thermal management component. The second thermal management component is disposed in the case, and each second end surface is connected to the second thermal management component.

By providing the second thermal management component and connecting it to the second end surface, the battery cell can be heated or cooled through the second thermal management component, such that the temperature environment of the battery cell is stable.

In some embodiments, the plurality of battery cells are arranged in an array; the thermal management component includes a third thermal management component configured to be suitably disposed between two adjacent columns or two adjacent rows of battery cells, the battery cell includes a plurality of surfaces, and the third thermal management component is in heat exchange connection with a surface with the largest area among the plurality of surfaces of the battery cell.

Arranging the battery cells in an array in the case facilitates the arrangement and mounting of the battery cells.

By providing the third thermal management component between two adjacent columns or two adjacent rows of battery cells, the battery cells can be heated or subjected to heat dissipation through the third thermal management component. By allowing the third thermal management component to be in heat exchange connection with the surface with the largest area among the plurality of surfaces of the battery cell, the third thermal management component can be in heat conducting connection with the large surface of the battery cell to increase the heat conducting connection area between the third thermal management component and the battery cell, thus heating the battery cell or dissipating its heat more efficiently.

In some embodiments, the third thermal management component is disposed between any two adjacent columns or any two adjacent rows of battery cells; or
one side of each column of battery cells is provided with the third thermal management component, and two adjacent third thermal management components are spaced apart with two columns of the battery cells therebetween; or
one side of each row of battery cells is provided with the third thermal management component, and two adjacent third thermal management components are spaced apart with two rows of the battery cells therebetween.

Since the third thermal management component is arranged between any two adjacent columns or any two adjacent rows of battery cells, among the battery cells in the array, the two columns or two rows of battery cells at the end parts are each in heat conducting connection with one third thermal management component, while the remaining columns or remaining rows of battery cells are each in heat conducting connection with two third thermal management components, such that the heat conducting connection area between the battery cells and the third thermal management components in the case is large to better regulate and control the temperature of the battery cells.

Since the third thermal management component is arranged on one side of each column of battery cells, the battery cells in each column are in heat conducting connection with one third thermal management component, such that the temperature of each battery cell can be regulated and controlled through the third thermal management component, making the temperature environment of the battery cells more stable.

Since the third thermal management component is arranged on one side of each row of battery cells, the battery cells in each row are in heat conducting connection with one third thermal management component, such that the temperature of each battery cell can be regulated and controlled through the third thermal management component, making the temperature environment of the battery cells more stable.

In some embodiments, the battery further includes a liquid distribution tube connected to one end of the flow channel of each third thermal management component and a liquid return tube connected to the other end of the flow channel of each third thermal management component.

The liquid distribution tube and the liquid return tube are arranged to be respectively connected to two ends of the flow channel of the third thermal management component, so as to facilitate the supply of the coolant liquid to each third thermal management component.

In some embodiments, the liquid distribution tube and the liquid return tube are located at the same end of the third thermal management component.

The liquid distribution tube and the liquid return tube are arranged at the same end of the third thermal management component, such that the liquid distribution tube and the liquid return tube can be easily led out, so as to be connected to an external coolant liquid supply system.

In some embodiments, the third thermal management component is provided with two flow channel sets, one end of the third thermal management component is provided with a flow collecting member, and the flow collecting member is in communication with the two flow channel sets.

Two flow channel sets are disposed in the third thermal management component, and the flow collecting member is provided to connect the two flow channel sets, thus facilitating the processing and manufacturing of the third thermal management component.

In some embodiments, the case is provided therein with a reinforcing beam, the reinforcing beam extends along a direction perpendicular to the length direction of the third thermal management component, the reinforcing beam is provided with an accommodating groove configured to accommodate the flow collecting member, and the flow collecting member is arranged in the corresponding accommodating groove.

The reinforcing beam is arranged in the case to increase the structural strength of the battery. The accommodating groove is arranged on the reinforcing beam, and the flow collecting member of the third thermal management component is arranged in the corresponding accommodating groove. This can reduce the distance between the reinforcing beam and the battery cell, improve the space utilization rate of the case, enhance the overall integration of the battery, and improve the energy density.

In some embodiments, a liquid inlet tube and a liquid outlet tube are mounted on the case. The liquid inlet tube is in communication with one end of the flow channel in the thermal management component, and the liquid outlet tube is in communication with the other end of the flow channel in the thermal management component.

The liquid inlet tube and the liquid outlet tube are provided to enable connection to an external coolant liquid supply system, such that the coolant liquid flows through the thermal management component and thereby exchanges heat with the thermal management component to heat or cool the battery cell.

In some embodiments, the thermal management component includes a first extending part. The first extending part extends out of the case from one end of the case in the height direction, and the liquid inlet tube and the liquid outlet tube are mounted on the first extending part.

The first extending part is provided, and the liquid inlet tube and the liquid outlet tube are mounted on the first extending part to support the liquid inlet tube and the liquid outlet tube through the first extending part. The first extending part extends out of the case from one end of the case in the height direction, and the first extending part can be conveniently arranged outside the case without providing an opening structure on the case, such that the liquid inlet tube and the liquid outlet tube can be led out of the case to facilitate the connection of the liquid inlet tube and the liquid outlet tube to an external coolant liquid supply system.

In some embodiments, the case includes a sealing plate located at an end part of the case in the height direction thereof. The sealing plate is located at one end of the case proximal to the first extending part, the sealing plate is provided with an outwardly extending second extending part, and the first extending part is in sealing connection with the second extending part.

By providing the second extending part on the sealing plate of the case, not only the first extending part can be supported through the second extending part, but also the first extending part can be protected and the sealing connection of the case is facilitated.

In some embodiments, an insulating guard plate is disposed between at least one first frame and the battery cell.

Providing an insulating guard plate between the first frame of the case and the battery cell can provide cushioning, insulation, and thermal insulation effects to protect the battery cell, and can also provide a certain space for the expansion and deformation of the battery cell.

In a second aspect, the embodiments of the present application provide an electric device. The electric device includes the battery described in the above embodiments.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application, the drawings required for illustrating the embodiments or exemplary solutions are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is a schematic diagram of an exploded structure of a battery according to some embodiments of the present application;
FIG. 3 is a schematic structural diagram of a battery cell according to some embodiments of the present application;
FIG. 4 is a schematic structural diagram of the battery cell in FIG. 2 mounted in a case;
FIG. 5 is a schematic diagram of part of the structure of the battery in FIG. 2;
FIG. 6 is a schematic diagram of part of the structure of the battery in FIG. 5;
FIG. 7 is an enlarged view of portion A in FIG. 6;
FIG. 8 is a schematic structural diagram of a first thermal management component according to some embodiments of the present application;
FIG. 9 is an enlarged view of portion B in FIG. 8;
FIG. 10 is a schematic diagram of an exploded structure of a battery according to some embodiments of the present application;
FIG. 11 is a schematic structural diagram of a second thermal management component according to some embodiments of the present application;
FIG. 12 is an enlarged view of portion C in FIG. 11;
FIG. 13 is a schematic diagram of an exploded structure of a battery according to some embodiments of the present application;
FIG. 14 is a schematic diagram of an exploded structure of a battery according to some other embodiments of the present application;
FIG. 15 is an enlarged view of portion D in FIG. 14;
FIG. 16 is a schematic diagram of an exploded structure of a battery according to some embodiments of the present application;
FIG. 17 is a schematic diagram of an exploded structure of a battery according to some other embodiments of the present application;
FIG. 18 is a schematic diagram of part of the structure of the battery in FIG. 17;
FIG. 19 is an enlarged view of portion E in FIG. 18;
FIG. 20 is a schematic diagram of an exploded structure of a battery according to some other embodiments of the present application;
FIG. 21 is a schematic diagram of part of the structure of the battery in FIG. 20;
FIG. 22 is an enlarged view of portion F in FIG. 21;
FIG. 23 is a schematic diagram of an exploded structure of a battery according to still some embodiments of the present application;
FIG. 24 is a schematic diagram of an exploded structure of a battery according to some other embodiments of the present application;
FIG. 25 is a schematic structural diagram showing the distribution of battery cells in a case according to some embodiments of the present application;
FIG. 26 is a schematic structural diagram showing the distribution of battery cells in a case according to some other embodiments of the present application; and
FIG. 27 is a schematic structural diagram showing the distribution of battery cells in a case according to still some embodiments of the present application.

Major reference numerals in the drawings have the following meanings:
1000-vehicle; 1001-battery; 1002-controller; 1003-motor;
100-battery cell; 101-type-I battery cell; 102-type-II battery cell; 11-end surface; 111-first end surface; 112-second end surface; 12-side surface; 121-first side surface; 122-second side surface; 13-electrode terminal; 14-pressure relief mechanism;
200-case; 201-accommodating space; 2011-mounting space; 2012-receiving space; 202-frame; 2021-first frame; 2022-second frame; 21-lower case body; 22-cover plate; 221-second extending part; 23-load-bearing beam; 24-reinforcing beam; 241-accommodating groove; 25-bottom plate;
310-first thermal management component; 311-first hole; 312-second hole; 320-second thermal management component; 330-third thermal management component; 331-flow collecting member;
410-insulating guard plate; 420-battery management system; 430-busbar member; 440-heat preservation layer;
510-adhesive stopping structure; 511-rib-like strip; 520-adhesive blocking structure; 521-ridge-like strip;
611-liquid inlet tube; 612-liquid outlet tube; 620-first extending part; 631-liquid distribution tube; 632-liquid return tube.

### DETAILED DESCRIPTION

In order to make the technical problems, the technical solutions, and the beneficial effects of the present application more apparent, the present application is further described in detail below with reference to the drawings and embodiments. It should be understood that the specific embodiments described herein are merely illustrative of the present application and do not limit the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. Therefore, a feature defined with "first" or "second" may explicitly or implicitly include one or more such features.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein may be combined with other embodiments in any appropriate manner.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of' refers to two or more (including two). Similarly, "plurality of groups" refers to two or more (including two) groups, and "plurality of pieces" refers to two or more (including two) pieces. The meaning of "several" is one or more, unless otherwise specifically defined.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

In the description of the embodiments of the present application, unless otherwise clearly specified and defined, when an element is referred to as being "fixed to" or "disposed on" another element, it may be directly on or indirectly on the other element. When an element is referred to as being "connected to" another element, it may be directly connected to the other element or indirectly connected to the other element.

In the description of the embodiments of the present application, unless otherwise clearly specified and defined, the technical term "adjacent" means being close in position. For example, there are three components A₁, A₂, and B, and the distance between A₁ and B is greater than the distance between A₂ and B, and in this case, A₂ is closer to B than A₁; that is, A₂ is adjacent to B, or in other words, B is adjacent to A₂. For another example, when there are a plurality of components C, i.e., C₁, C₂, ..., C_{N}, and when one of the components C, such as C₂, is closer to component B than the other components C, B is adjacent to C₂, or in other words, C₂ is adjacent to B.

The 4C charging mentioned in the embodiments of the present application means that the battery is fully charged in one quarter of an hour (15 minutes), 3C charging means that the battery is fully charged in one third of an hour (20 minutes), and 2C charging means that the battery is fully charged in one half of an hour (30 minutes). Therefore, the 4C charging also means fast charging.

In the embodiments of the present application, battery cells include, but are not limited to, lithium-ion secondary batteries, lithium-ion primary batteries, lithium-sulfur batteries, sodium-lithium-ion batteries, sodium-ion batteries, magnesium-ion batteries, or the like. The shape of the battery cell includes, but is not limited to, a flat body, a rectangular parallelepiped, and the like.

The battery mentioned in the embodiments of the present application refers to a single physical module including one or a plurality of battery cells to provide higher voltage and capacity. The battery generally includes a case used to encapsulate one or a plurality of battery cells. The case can, to a certain extent, prevent liquid or other foreign matters from affecting the charging or discharging of the battery cells.

If a plurality of battery cells are provided in a battery, the plurality of battery cells may be connected in series, in parallel, or in series-parallel. The series-parallel connection means that both series connection and parallel connection are present for the connection of the plurality of battery cells. The plurality of battery cells may be directly connected in series, in parallel, or in series-parallel, and then the whole formed by the plurality of battery cells is accommodated in the case. Certainly, the situation may be that in the battery, the plurality of battery cells are first connected in series, in parallel, or in series-parallel to form battery modules, and then the plurality of battery modules are connected in series, in parallel, or in series-parallel to form a single unit and accommodated in the case. The battery may further include other structures. For example, the battery may further include a busbar component for achieving electrical connection among the plurality of battery cells.

The battery cell in the embodiments of the present application includes an electrode assembly and a housing, and the electrode assembly is mounted in the housing, thus protecting the electrode assembly through the housing.

The electrode assembly is also referred to as a cell, and the electrode assembly is composed of a positive electrode plate, a negative electrode plate, and a separator. The electrode assembly primarily operates by the movement of metal ions between the positive electrode plate and the negative electrode plate. The positive electrode plate includes a positive electrode current collector and a positive electrode active substance layer, and the positive electrode active substance layer is applied on the surface of the positive electrode current collector. The portion of the positive electrode current collector that is not coated with the positive electrode active substance layer protrudes from the portion of the positive electrode current collector that is coated with the positive electrode active substance layer, and the portion that is not coated with the positive electrode active substance layer serves as a positive electrode tab, or a metal conductor is welded to the positive electrode current collector and led out to serve as the positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer, and the negative electrode active substance layer is applied on the surface of the negative electrode current collector. The portion of the negative electrode current collector that is not coated with the negative electrode active substance layer protrudes from the portion of the negative electrode current collector that is coated with the negative electrode active substance layer, and the portion that is not coated with the negative electrode active substance layer serves as a negative electrode tab, or a metal conductor is welded to the negative electrode current collector and led out to serve as the negative electrode tab. The material of the negative electrode current collector may be copper, and the negative electrode active substance may be carbon, silicon, or the like. To ensure, to a certain extent, the passing of a large current without fusing, there are a plurality of positive electrode tabs that are stacked together, and there are a plurality of negative electrode tabs that are stacked together. It can be understood that in the electrode assembly, the number of the positive electrode tabs may be one, and the number of the negative electrode tabs may also be one. That is, the electrode assembly is provided with two groups of tabs, each group includes at least one tab, one group of tabs are positive electrode tabs, and the other group of tabs are negative electrode tabs.

The electrode assembly may be of a wound structure or a stacked structure. The embodiments of the present application are not limited thereto. For a wound structure, generally tabs are welded to current collectors, and components are then arranged in the sequence of positive electrode plate-separator-negative electrode plate-separator, and then winding is performed to obtain a cylindrical or prismatic cell. For a stacked structure, generally tabs are led out from current collectors, and the positive electrode plate, the negative electrode plate, and the separator are arranged in the sequence of positive electrode plate-separator-negative electrode plate-separator, and are stacked layer by layer to form a stacked cell, where the separator may be cut into separator pieces for direct stacking, or the separator may be folded in a Z-shape without being cut. The material of the separator may be polypropylene (PP), polyethylene (PE), or the like. The separator is an insulating film disposed between the positive electrode plate and the negative electrode plate, and its main function is to isolate the positive electrode and the negative electrode and prevent electrons in the battery from passing freely, so as to prevent short circuits to a certain extent, thus enabling ions in the electrolytic solution to pass freely between the positive electrode and the negative electrode to form a circuit between the positive electrode and the negative electrode. The positive electrode plate and the negative electrode plate are collectively referred to as an electrode plate. The positive electrode tab and the negative electrode tab are collectively referred to as a tab.

The housing refers to a shell structure having a space therein to accommodate and protect the electrode assembly. The housing may be made of a material with a certain hardness and strength, such that the housing is not easy to deform when it is squeezed and in collision, thereby enabling the battery cell to have higher structural strength and improved reliability. The housing may be made of various materials, including but not limited to copper, iron, aluminum, stainless steel, aluminum alloy, plastic, and the like.

The housing of the battery cell is provided with an electrode terminal. The electrode terminal refers to a conductive member arranged on the housing, and the electrode terminal is connected to the tabs of the electrode assembly to output electric energy of the battery cell or charge the battery cell. The battery cell generally has two electrode terminals, and the two electrode terminals are respectively connected to positive and negative electrode tabs of the electrode assembly. The electrode terminal connected to the positive electrode tab is a positive electrode terminal, and the electrode terminal connected to the negative electrode tab is a negative electrode terminal. The electrode assembly is connected to the electrode terminals to form a battery cell.

When a battery cell is charged, the current converts electric energy into chemical energy through a chemical reaction between an electrolyte and electrodes and the chemical energy is stored in the battery cell. In the discharge process, chemical energy is converted into electric energy for release. This energy conversion process is accompanied by energy loss and heat generation. If the internal heat dissipation of the battery cell is poor and the heat cannot be effectively dissipated, the battery cell will be overheated. There is a certain internal resistance inside the battery cell, and a resistance loss will be generated when the current passes through the internal resistance, resulting in heat generation inside the battery cell. When the current is too large or the internal resistance is too high, the heat generation inside the battery cell will be intensified, resulting in overheating of the battery cell. If the designed maximum voltage is exceeded during the charging of the battery cell or the battery cell's voltage drops to a too low level during discharging, overvoltage or overdischarging of the battery cell will be caused. Overcharging or overdischarging will cause uncontrolled chemical reactions inside the battery cell, generating excessive heat and resulting in overheating of the battery cell. In addition, there may be defects in the design or manufacturing process of the battery cell, such as improper material selection, and poor battery cell assembly. These defects may lead to poor heat dissipation or uneven current distribution inside the battery cell, thereby increasing the risk of overheating or overvoltage of the battery cell. Therefore, the battery cell may be subjected to overheating or overvoltage during charging or use.

The battery cell usually contains a certain amount of gas. When the battery cell is charged or discharged, gas generation or absorption reactions occur in the solution in the electrolyte. The generation of these gases will cause an increase in gas pressure inside the battery cell, resulting in expansion and deformation of the battery cell. During the charging or discharging of the battery cell, the positive and negative electrode materials will react chemically to form new compounds. These chemical reactions are accompanied by a change in volume, resulting in a change in the volume of the material inside the battery cell, and thereby causing the battery to expand and deform. When the battery cell is overcharged or overdischarged, the chemical reaction inside the battery cell is out of control, such that excessive gas is generated or the structure of the electrode material is damaged, thereby causing the expansion and deformation of the battery cell. The charging or discharging of the battery cell in a high-temperature environment will accelerate the internal chemical reaction and increase the generation of gas and the volume change. The high temperature may also cause expansion of internal substances of the battery cell, and also result in expansion and deformation of the battery cell.

To reduce the risk of explosion or fire caused by overheating or overvoltage of the battery cell during charging or use, pressure relief mechanisms such as anti-explosion valves and anti-explosion sheets are often provided on the housing of the battery cell, such that when the temperature or pressure of the battery cell exceeds a safety threshold, the gas or liquid inside the battery cell can be released to reduce the pressure inside the battery cell and reduce the risk of explosion of the battery cell. In this way, the safety performance of the battery cell can be improved, and potential safety risks can be reduced.

The electrode terminals of the battery cell in the battery are welded to a busbar member, and the busbar member may be a conductive member such as a copper busbar or an aluminum busbar, so as to charge or discharge the battery cell. When the battery cell is excessively expanded, the connection between the electrode terminal of the battery cell and the housing may be damaged due to expansion, the case of the battery may also be damaged due to expansion, and the welding joint between the electrode terminal and the busbar member may also be cracked due to expansion, thereby causing the failure of the battery. Therefore, when the battery is manufactured, it is necessary to effectively resist the expansion and deformation of the battery cell.

To resist the expansion and deformation of the battery cell, an extruded aluminum profile case is usually used, and an expansion beam is disposed in the case. The expansion beam and the frame of the case are connected by a filler block or a die-cast bracket. When the expansion force of the battery cell is large, a tie bar is often disposed to connect one end of the battery cell provided with the electrode terminal to resist the expansion and deformation of the battery cell. However, such a battery structure is costly, and the energy density is also reduced.

Based on the above considerations, to resist the expansion and deformation of the battery cell in the battery, the embodiments of the present application provide a battery. By providing load-bearing beams on first frames on two sides of the case and allowing the length direction of the battery cell to be parallel to the first frames and allowing the first frames to abut against the large surfaces of the adjacent battery cells, a constraining force can be provided can be provided by the load-bearing beams to resist the expansion and deformation of the battery cells.

The battery cell disclosed in the embodiments of the present application can be used in electric devices that use batteries as the power source or in various energy storage systems that use batteries as the energy storage element, for example, applied in energy storage power systems such as hydropower, thermal power, wind power, and solar power stations. The electric device may be, but is not limited to, a mobile phone, a tablet, a laptop computer, an electric toy, an electric tool, an electric bicycle, an electric motorcycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For convenience of description, an embodiment of the present application provides an electric device, and a vehicle is taken as an example of the electric device for illustration.

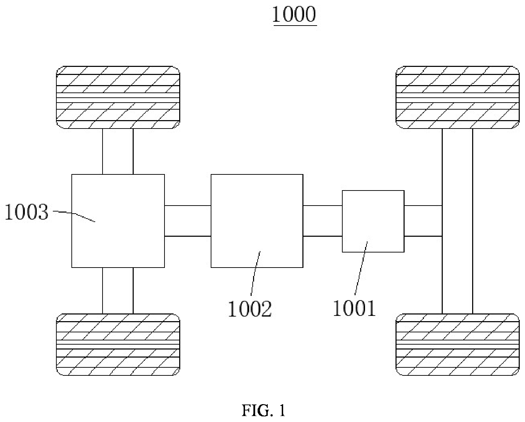

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 1001 is disposed inside the vehicle 1000, and the battery 1001 may be disposed at the bottom, head, or tail of the vehicle 1000. The battery 1001 may be configured to power the vehicle 1000. For example, the battery 1001 may serve as an operation power source of the vehicle 1000. The vehicle 1000 may further include a controller 1002 and a motor 1003. The controller 1002 is configured to control the battery 1001 to supply power to the motor 1003, e.g., for the operation power needed by the vehicle 1000 for start-up, navigation, and driving.

In some embodiments of the present application, the battery 1001 may not only serve as an operation power source for the vehicle 1000, but also as a driving power source for the vehicle 1000 to, instead of or in part instead of fuel or natural gas, provide driving power for the vehicle 1000.

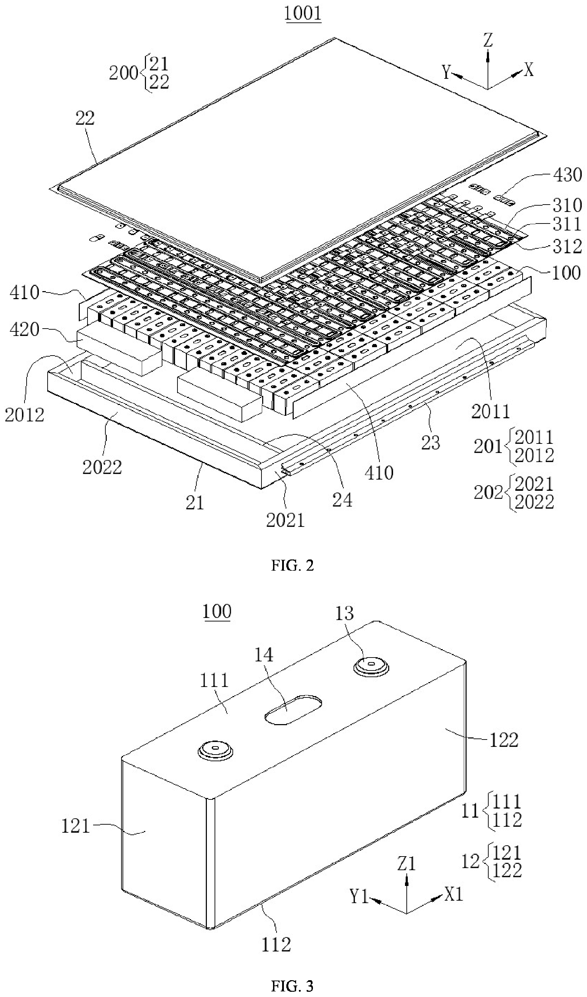

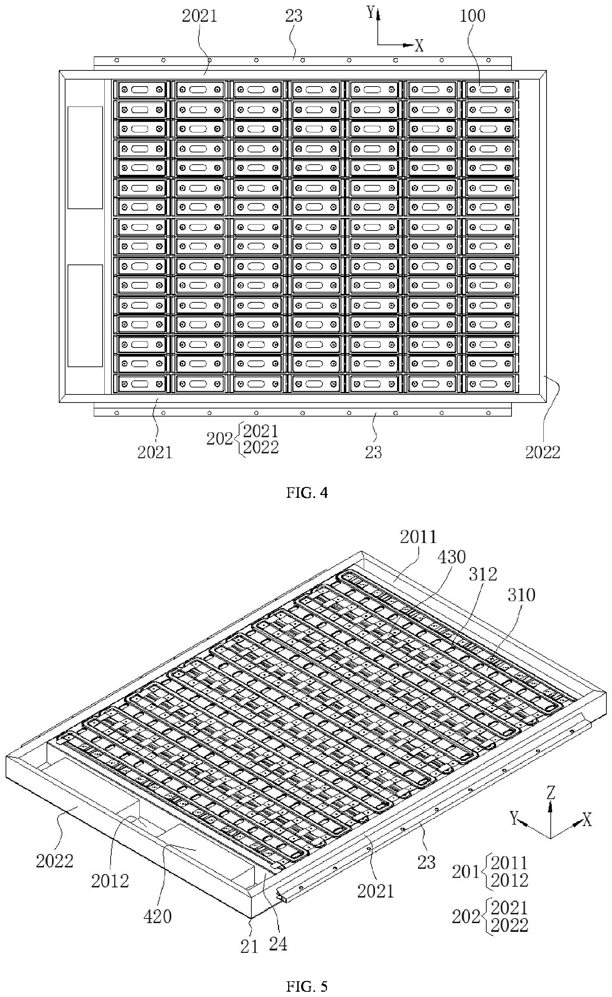

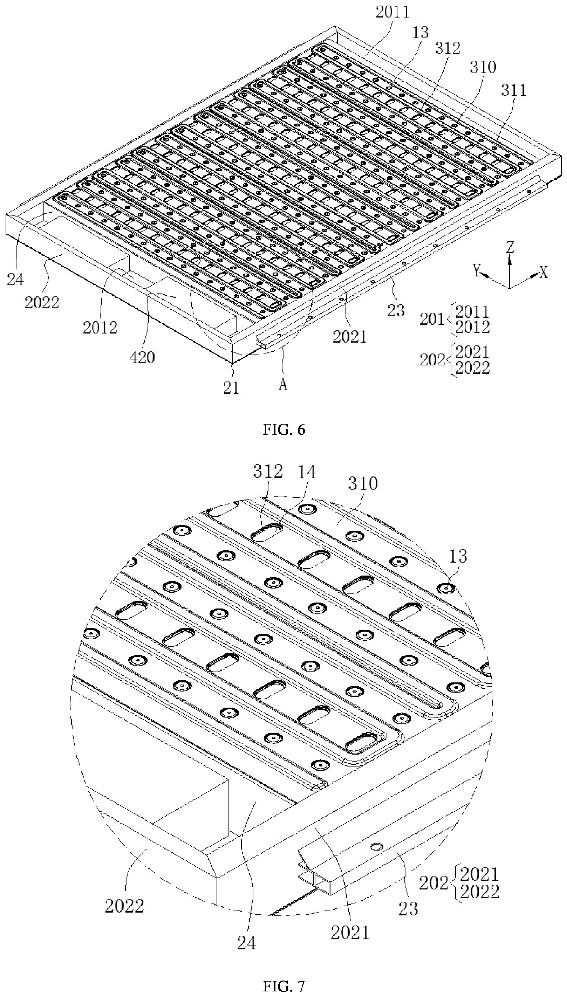

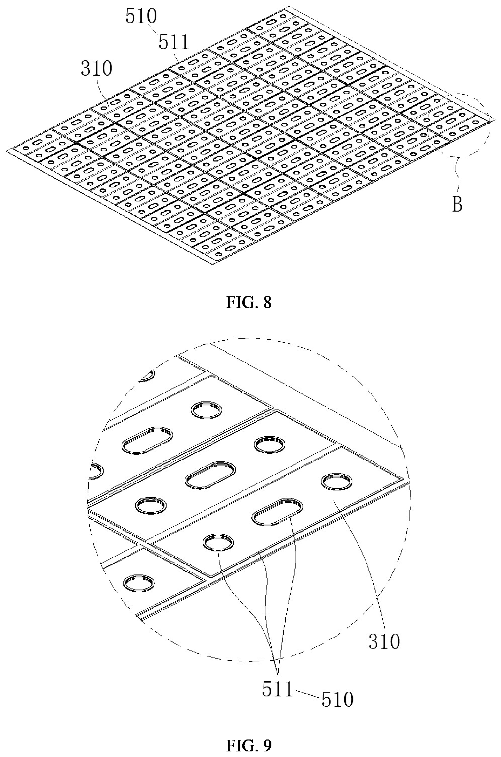

Referring to FIGs. 2 to 9, FIG. 2 is a schematic diagram of an exploded structure of a battery 1001 according to some embodiments of the present application. FIG. 3 is a schematic structural diagram of a battery cell 100 according to some embodiments of the present application. FIG. 4 is a schematic structural diagram of the battery cell 100 in FIG. 2 mounted in a case 200. FIG. 5 is a schematic diagram of part of the structure of the battery 1001 in FIG. 2, where a cover plate 22 of the battery 1001 is not shown. FIG. 6 is a schematic diagram of part of the structure of the battery 1001 in FIG. 5, where a busbar member 430 in FIG. 5 is not shown. FIG. 7 is an enlarged view of portion A in FIG. 6. FIG. 8 is a schematic structural diagram of a first thermal management component 310 according to some embodiments of the present application. FIG. 9 is an enlarged view of portion B in FIG. 8.

Referring to FIG. 2, the battery 1001 has a height direction, a length direction, and a width direction. In the figure, the Z direction is the height direction of the battery 1001, the X direction is the length direction of the battery 1001, and the Y direction is the width direction of the battery 1001. The length of the battery 1001 may be longer or shorter than the width. A case 200 defines an outline structure of the battery 1001. The height direction of the case 200 is the height direction Z of the battery 1001, the length direction of the case 200 is the length direction X of the battery 1001, and the width direction of the case 200 is the width direction Y of the battery 1001.

Referring to FIG. 3, the battery cell 100 also has a height direction, a length direction, and a width direction. In the figure, the Z1 direction is the height direction of the battery cell 100, the X1 direction is the length direction of the battery cell 100, and the Y1 direction is the width direction of the battery cell 100. Two end surfaces 11 of the battery cell 100 along the height direction Z1 thereof are a first end surface 111 and a second end surface 112. That is, the height of the battery cell 100 is defined between the first end surface 111 and the second end surface 112. The surface located at the side of the height direction Z1 of the battery cell 100 is a side surface 12 of the battery cell 100, and the side surface 12 includes two first side surfaces 121 located at two ends of the length direction X1 of the battery cell 100 and two second side surfaces 122 located at two ends of the width direction Y1. That is, the distance between the two first side surfaces 121 is the length of the battery cell 100, and the distance between the two second side surfaces 122 is the width of the battery cell 100. The area of the two end surfaces 11 is defined by the length and width of the battery cell 100, the area of the first side surface 121 is defined by the height and width of the battery cell 100, and the area of the second side surface 122 is defined by the height and length of the battery cell 100. For a flat battery cell 100, such as a prismatic battery cell, its width is smaller than its length and height, and its second side surface 122 has the largest area, so the second side surface 122 is also called a large surface.

Referring to FIGs. 2 to 4, according to some embodiments of the present application, the present application provides a battery 1001. The battery includes: a case 200 including first frames 2021 at two ends in a width direction, each first frame 2021 extending along a length direction of the case 200; and a plurality of battery cells 100 mounted in the case 200, where a length direction of each battery cell 100 is parallel to the length direction of the case 200, the battery cells 100 adjacent to the first frames 2021 abut against the first frames 2021, and each first frame 2021 is provided with a load-bearing beam 23.

The case 200 refers to a shell structure with an accommodating space 201, and the components of the battery 1001 such as the battery cells 100 are mounted in the accommodating space 201 of the case 200, thus supporting and protecting these components through the case 200. The case 200 includes a plurality of frames 202, the plurality of frames 202 are sequentially connected to form the side portion of the case 200, and each frame 202 forms a side wall of the accommodating space 201 of the case 200. The plurality of frames 202 include first frames 2021 and second frames 2022. The first frame 2021 extends along the length direction X of the case 200, such that two first frames 2021 are located at two ends of the case 200 in the width direction Y, and the length direction of the first frame 2021 is consistent with the length direction X of the case 200. The second frame 2022 extends along the width direction Y of the case 200, such that two second frames 2022 are located at two ends of the case 200 in the length direction X, and the length direction of the second frames 2022 is consistent with the width direction Y of the case 200.

The battery cell 100 is a unit that boosts electric energy in the battery 1001.

Since the length direction of the battery cell 100 is parallel to the length direction of the case 200, the width direction Y1 of the battery cell 100 is parallel to the width direction Y of the case 200. The width direction Y1 of the battery cell 100 is consistent with the width direction Y of the case 200, and the length direction X1 of the battery cell 100 is consistent with the length direction X of the case 200. The second side surfaces 122 of the battery cell 100 (i.e., the large surfaces of the battery cell 100) are located on two sides of the battery cell 100 in the length direction, so the second side surfaces 122 of the battery cell 100 are parallel to the length direction of the case 200. Since the first frames 2021 extend along the length direction of the case 200, the second side surfaces 122 are disposed parallel to the first frames 2021.

The battery cells 100 adjacent to the first frames 2021 abutting against the first frames 2021 means that the battery cells 100 are mounted in the case 200, and the battery cells 100 close to the first frames 2021 abut against the first frames 2021, thus securing the positions of the battery cells 100 through the first frame 2021, such that the case 200 stably supports the battery cells 100.

The load-bearing beam 23 refers to a beam structure for connecting an external device to support the battery 1001. The load-bearing beam 23 is provided to facilitate the mounting of the battery 1001, thereby facilitating the mounting and use of the battery 1001. Providing the load-bearing beam 23 on the first frame 2021 can increase the overall structural strength of the battery 1001.

For a battery cell 100 of a flat shape, a prismatic shape, or the like, the main body of the electrode plate is mostly a stack along the width direction Y1. Therefore, when the battery cell 100 is charged and discharged, the expansion and deformation of the battery cell 100 in the width direction Y1 will also be large. Since the expansion and deformation of the battery cell 100 in the width direction Y1 is large, that is, since the expansion and deformation of the side where the large surface (i.e., the second side surface 122) of the battery cell 100 is located will be large, and the large surface of the battery cell 100 in the case 200 is parallel to the first frame 2021, when the battery cell 100 is charged and discharged, the first frame 2021 will bear the acting force induced by larger expansion and deformation of the battery cell 100. By providing the load-bearing beam 23 on the first frame 2021, the structural strength of the first frame 2021 can be enhanced to resist the expansion and deformation of the battery cell 100. In addition, the load-bearing beam 23 can protect the battery cells 100 in the case 200 when an external impact is present.

In the technical solutions of the embodiments of the present application, by allowing the length direction of the battery cell 100 to be parallel to the length direction of the case 200, allowing the first frames 2021 to abut against the adjacent battery cells 100, and allowing the first frames 2021 to be located at the end parts of the case 200 in the width direction, the first frames 2021 abut against the large surfaces of the adjacent battery cells 100. By providing the load-bearing beam 23 on the first frame 2021, the mounting and use of the battery 1001 is facilitated, and a constraining force can be provided by the load-bearing beam 23 to resist the expansion and deformation of the battery cells 100.

In some embodiments, a load-bearing beam 23 may also be provided on other frames 202 of the case 200. For example, a load-bearing beam 23 may be provided on the second frame 2022 to connect to an electric device, thereby improving the immobility of the battery 1001 mounted on the electric device and facilitating the use of the battery 1001.

In some embodiments, the load-bearing beam 23 and the corresponding frame 202 of the case 200 may be of an integrated structure. That is, the load-bearing beam 23 and the corresponding frame 202 are integrally formed, so as to facilitate the processing and manufacturing and also facilitating the assembly. For example, in some embodiments, the load-bearing beam 23 and the first frame 2021 are of an integrally formed structure.

In some embodiments, the load-bearing beam 23 may also be manufactured separately and then fixedly connected to the corresponding frame 202 of the case 200 by fasteners such as bolts.

In some embodiments, the load-bearing beam 23 may also be manufactured separately and then fixedly connected to the corresponding frame 202 of the case 200 by welding or the like.

Referring to FIGs. 2 and 3, in some embodiments, two ends of the battery cell 100 along the height direction respectively have a first end surface 111 and a second end surface 112, and the second end surface 112 is adhesively connected to the case 200.

The first end surface 111 and the second end surface 112 are two end surfaces 11 of the battery cell 100 in the height direction.

The second end surface 112 is adhesively connected to the case 200 to fix the battery cell 100, such that the case 200 can stably support the battery cell 100.

In some embodiments, the second end surface 112 is fixedly connected to the case 200 through a structural adhesive.

The structural adhesive refers to an adhesive that has high strength, can bear large loads, is aging-resistant, fatigue-resistant, corrosion-resistant, has stable performance within a life expectancy, and is suitable for bearing strong adhesion of a structural member.

The second end surface 112 of the battery cell 100 is fixedly connected to the case 200 through a structural adhesive, such that a plurality of battery cells 100 may be connected into a single unit to improve the overall structural strength of the battery 1001, thus effectively resisting the expansion and deformation of the battery cells 100, reducing the risk of failure of the battery cells 100 due to expansion and deformation, and improving the overall structural strength of the battery 1001.

Referring to FIGs. 2 to 7, in some embodiments, a thermal management component is mounted in the case 200, and the thermal management component is in heat conducting connection with the battery cell 100.

Heat conducting connection means that two objects are connected through direct contact, or the two objects are connected by using a thermally conductive structure such as thermally conductive adhesive or a thermally conductive pad, such that the heat of the two objects can be conducted, and the heat of an object with a relatively high temperature can be conducted to an object with a relatively low temperature.

The thermal management component is in heat conducting connection with the battery cell 100, such that the thermal management component can control the temperature of the battery cell 100.

The thermal management component refers to a component configured to exchange heat with an object with which it is in heat conducting connection to control the temperature of the object. The thermal management component may be a plate-like member, such as a liquid cooling plate, having a flow channel provided therein for enabling coolant liquid such as water and oil to flow for heat exchange. The thermal management component may also be a component that can perform heat exchange, such as a semiconductor cooling device. When a flow channel is present inside the thermal management component and the temperature of the coolant liquid passing through the flow channel of the thermal management component is higher than that of an object in heat conducting connection with the thermal management component, the thermal management component may heat the object. When the temperature of the coolant liquid passing through the thermal management component is lower than that of the object in heat conducting connection with the thermal management component, the thermal management component may cool the object to dissipate heat.

By providing the thermal management component and allowing it to be in heat conducting connection with the battery cell 100 to heat or cool the battery cell 100 through the thermal management component, a stable temperature environment of the battery cell 100 can be improved, thus facilitating stable charging and discharging of the battery cell 100.

In some embodiments, one end of each battery cell 100 along the height direction has a first end surface 111, and the first end surface 111 is provided with an electrode terminal 13. The thermal management component includes a first thermal management component 310, each first end surface 111 is adhesively connected and fixed to the first thermal management component 310 through a thermally conductive structural adhesive, and the first thermal management component 310 is provided with first holes 311 exposing the electrode terminals 13.

The electrode terminal 13 is a conductive member located on the battery cell 100 and configured to connect an external circuit to output electric energy to the outside or charge the battery cell 100.

The first thermal management component 310 refers to a thermal management component disposed on the first end surface 111 side of the battery cell 100. For example, the first thermal management component 310 may be a plate-like member, such as a liquid cooling plate, having a flow channel provided inside for enabling coolant liquid such as water and oil to flow for heat exchange. The first thermal management component 310 may also be a component that can perform heat exchange, such as a semiconductor cooling device. When a flow channel is present inside the first thermal management component 310 and the temperature of the coolant liquid passing through the flow channel of the first thermal management component 310 is higher than that of an object in heat conducting connection with the first thermal management component 310, the first thermal management component 310 may heat the object. When the temperature of the coolant liquid passing through the first thermal management component 310 is lower than that of the object in heat conducting connection with the first thermal management component 310, the first thermal management component 310 may cool the object to dissipate heat.

The thermally conductive structural adhesive refers to a structural adhesive having thermal conductivity. The structural adhesive refers to an adhesive that has high strength, can bear large loads, is aging-resistant, fatigue-resistant, corrosion-resistant, has stable performance within a life expectancy, and is suitable for bearing strong adhesion of a structural member. In addition, by allowing the first end surface 111 to be adhesively connected and fixed to the first thermal management component 310 through a thermally conductive structural adhesive, the first thermal management component 310 can be in heat conducting connection with the first end surface 111.

The first end surface 111 and the first thermal management component 310 are adhesively connected by the thermally conductive structural adhesive, such that the first end surface 111 and the first thermal management component 310 can be firmly connected. As a result, when the battery cell 100 expands and deforms, the first thermal management component 310 can constrain the first end surface 111 to resist the expansion and deformation of the battery cell 100, thereby well reducing the risk of position movement of the electrode terminal 13 on the first end surface 111 to well protect the electrode terminal 13.

The first end surface 111 of each battery cell 100 is adhesively connected and fixed to the first thermal management component 310, such that these battery cells 100 may be connected into a single unit to enhance the overall structural strength of the battery 1001 and improve the overall safety of the battery 1001.

The first hole 311 refers to a through hole structure disposed on the first thermal management component 310. When the first end surface 111 of the battery cell 100 is adhesively connected and fixed to the first thermal management component 310, the electrode terminal 13 on the first end surface 111 is in the first hole 311, thus exposing the electrode terminal 13 through the first hole 311, and thereby enabling the conductive member such as the busbar member 430 to be connected to the electrode terminal 13 to facilitate the charging and discharging of the battery cell 100.

In addition, allowing the first end surface 111 of the battery cell 100 to be adhesively connected and fixed to the first thermal management component 310 can reduce the distance between the first thermal management component 310 and the battery cell 100, so as to better utilize the space in the battery 1001, improve the utilization rate of the space, and thereby improve the energy density of the battery 1001.

Moreover, since the first end surface 111 of the battery cell 100 is adhesively connected to the first thermal management component 310 through the thermally conductive structural adhesive, the battery cell 100 may be heated or cooled through the first thermal management component 310 to regulate and control the temperature of the battery cell 100. This not only provides a stable temperature environment for the battery cell 100, but also effectively reduces the risk of excessive expansion and deformation of the battery cell 100.

The first end surfaces 111 of the battery cells 100 are adhesively connected and fixed to the first thermal management component 310 through the thermally conductive structural adhesive, such that the first end surfaces 111 of the battery cells 100 are fixed through the first thermal management component 310, and thereby the plurality of battery cells 100 are connected into a single unit, thus improving the overall structural strength of the battery 1001, effectively resisting the expansion and deformation of the battery cells 100, and reducing the risk of failure of the battery cells 100 due to expansion and deformation; moreover, the battery cells 100 may be heated or cooled through the first thermal management component 310, such that the temperature environment of the battery cells 100 is more stable; allowing the first thermal management component 310 to be adhesively connected and fixed to the first end surfaces 111 can effectively save the height space in the battery 1001 and is conducive to improving the energy density and volume utilization rate of the battery 1001. In addition, the first thermal management component 310 cooperates with the load-bearing beam 23 to constrain and resist the expansion and deformation of the battery cell 100, which can better reduce the risk of failure of the battery cell 100 due to the expansion and deformation.

In some embodiments, the electrode terminal 13 may pass through the first hole 311, so as to be connected to a conductive member such as the busbar member 430.

In some embodiments, a surface of the electrode terminal 13 distal to the first end surface 111 may extend out of the first hole 311. That is, the height by which the electrode terminal 13 protrudes from the first end surface 111 is greater than the depth of the first hole 311, thus facilitating the connection to a conductive member such as the busbar member 430.

Certainly, in some embodiments, a surface of the electrode terminal 13 distal to the first end surface 111 may be flush with an end of the first hole 311 distal to the first end surface 111. That is, the height by which the electrode terminal 13 protrudes from the first end surface 111 is equal to the depth of the first hole 311, thus facilitating the connection to a conductive member such as the busbar member 430.

In some other embodiments, a surface of the electrode terminal 13 distal to the first end surface 111 may be located in the first hole 311. That is, the height by which the electrode terminal 13 protrudes from the first end surface 111 is less than the depth of the first hole 311. This requires that a conductive member, such as the busbar member 430, extend into the first hole 311 to connect to the electrode terminal 13.

Referring to FIG. 3 and FIGs. 7 to 9, in some embodiments, the battery 1001 further includes an adhesive stopping structure 510 disposed around the edge of each first end surface 111. The adhesive stopping structure 510 is disposed between the battery cell 100 and the first thermal management component 310.

The adhesive stopping structure 510 refers to a structure for blocking liquid adhesive to define the flow range of the liquid adhesive. By providing the adhesive stopping structure 510 between the battery cell 100 and the first thermal management component 310, the flow of the thermally conductive structural adhesive can be restricted through the adhesive stopping structure 510, thereby well reducing the overflow of the thermally conductive structural adhesive.

Disposing the adhesive stopping structure 510 around the edge of each first end surface 111 means that the edge of the first end surface 111 is surrounded by the adhesive stopping structure 510. When the thermally conductive structural adhesive is arranged on the first end surface 111 to allow the first end surface to be adhesively connected and fixed to the first thermal management component 310, the adhesive stopping structure 510 can effectively prevent the thermally conductive structural adhesive from flowing to the side surface 12 of the battery cell 100.

If the thermally conductive structural adhesive flows to the side surface 12 of the battery cell 100, once cured, its high strength will restrict the normal expansion and deformation of the battery cell 100 during charging and discharging, thereby affecting the service life of the battery cell 100. Therefore, allowing the adhesive stopping structure 510 to surround the edge of the first end surface 111 of the battery cell 100 can effectively prevent the thermally conductive structural adhesive from flowing to the side surface 12 of the battery cell 100, such that the battery cell 100 can undergo normal expansion and deformation during charging and discharging.

Providing the adhesive stopping structure 510 and allowing the adhesive stopping structure 510 to surround the edge of each first end surface 111 can prevent the thermally conductive structural adhesive from overflowing to the side surface 12 of the battery cell 100, so as to reduce the risk of a situation where the presence of cured thermally conductive structural adhesive between adjacent battery cells 100 affects the normal expansion and deformation of the battery cell 100 during charging and discharging and thereby the service life of the battery cell 100 is shortened.

In some embodiments, the adhesive stopping structure 510 is further disposed around each first hole 311.

Disposing the adhesive stopping structure 510 around each first hole 311 means that the peripheral side of the first hole 311 is surrounded by the adhesive stopping structure 510. When the thermally conductive structural adhesive is arranged on the first end surface 111 to allow the first end surface to be adhesively connected and fixed to the first thermal management component 310, the adhesive stopping structure 510 can effectively prevent the thermally conductive structural adhesive from flowing to the first hole 311.

If the thermally conductive structural adhesive enters the first hole 311 and is cured, the electrode terminal 13 may be prevented from extending into the first hole 311, or the thermally conductive structural adhesive may overflow onto the electrode terminal 13, thereby affecting the connection between the electrode terminal 13 and the conductive member such as the busbar member 430. Therefore, the adhesive stopping structure 510 is disposed around the first hole 311 to effectively prevent the thermally conductive structural adhesive from flowing to the first hole 311, such that the electrode terminal 13 can be well inserted into the first hole 311 and well connected to the conductive member such as the busbar member 430.

Providing the adhesive stopping structure 510 and allowing the adhesive stopping structure 510 to surround each first hole 311 can prevent the thermally conductive structural adhesive from overflowing to the first hole 311, thus reducing the risk of affecting the connection between the electrode terminal 13 and the busbar member 430 due to the overflow of the thermally conductive structural adhesive to the first hole 311.

In some embodiments, the first end surface 111 is provided with a pressure relief mechanism 14, the first thermal management component 310 is provided with venting mechanisms respectively opposite to the pressure relief mechanisms 14, and the adhesive stopping structure 510 is disposed around each venting mechanism.

The pressure relief mechanism 14 refers to a mechanism provided on the battery cell 100 to relieve the pressure inside the battery cell 100. The pressure relief mechanism 14 may be a structure such as an anti-explosion valve or an anti-explosion sheet provided on the battery cell 100. When the internal pressure of the battery cell 100 exceeds a set safety value, the pressure relief mechanism 14 may be opened to discharge the gas or liquid inside the battery cell 100, so as to reduce the internal pressure of the battery cell 100, thus reducing the risk of explosion of the battery cell 100, improving the safety performance of the battery cell 100, and reducing potential safety risks.

The venting mechanism refers to a structure provided on the first thermal management component 310 and allowing substances discharged by the pressure relief mechanism 14 to pass through it readily. The venting mechanism may be a hole provided on the first thermal management component 310, or may be a weakened zone provided on the first thermal management component 310 and susceptible to rupture by the substances discharged by the pressure relief mechanism 14. When the first end surface 111 of the battery cell 100 is adhesively connected and fixed to the first thermal management component 310, the pressure relief mechanism 14 on the first end surface 111 is at a position corresponding to the venting mechanism, such that when the pressure relief mechanism 14 is opened, the gas or liquid inside the battery cell 100 can be discharged.

If the thermally conductive structural adhesive enters the venting mechanism and is cured, the opening of the pressure relief mechanism 14 and/or the venting mechanism may be blocked, thereby affecting the safety of the battery cell 100. Therefore, the adhesive stopping structure 510 is disposed around the venting mechanism to effectively prevent the thermally conductive structural adhesive from flowing to the venting mechanism, thereby avoiding affecting the opening of the pressure relief mechanism 14 under certain conditions.

The pressure relief mechanism 14 is provided on the first end surface 111, such that the internal pressure of the battery cell 100 can be relieved during the transitional expansion of the battery cell 100, so as to protect the battery cell 100. The venting mechanism is provided on the first thermal management component 310 to allow for pressure relief of the pressure relief mechanism 14. The adhesive stopping structure 510 surrounds the venting mechanism to prevent the thermally conductive structural adhesive from overflowing to the venting mechanism, reducing the risk of affecting the opening of the pressure relief mechanism 14 for pressure relief.

In some embodiments, the pressure relief mechanism 14 may also be provided on the second end surface 112 of the battery cell 100, or on the side surface 12 of the battery cell 100.

In some embodiments, the venting mechanism is a second hole 312 disposed on the first thermal management component, and an inner wall of the second hole 312 is provided with an insulating layer.

The second hole 312 refers to a through hole structure disposed on the first thermal management component 310.

The inner wall of the second hole 312 refers to an inner surface of the second hole 312, and is also an inner surface of a side wall of the second hole 312.

The insulating layer refers to a film layer having insulation property. The insulating layer may be manufactured by spraying an insulating material onto the inner wall of the second hole 312 or by attaching an insulating film material to the inner wall of the second hole 312.

When the first thermal management component 310 is made of metal, the inner wall of the second hole 312 is also conductive, such that when the conductive member such as the busbar member 430 is connected to the electrode terminal 13, the inner wall of the second hole 312 actually shortens the conductive distance between the first thermal management component 310 and the conductive member such as the busbar member 430, such that the creepage distance between the first thermal management component 310 and the conductive member such as the busbar member 430 needs to be set to be larger, thereby increasing the risk of short circuits. However, by providing the insulating layer on the inner wall of the second hole 312, the risk of affecting the creepage distance between the busbar member 430 and the battery cell 100 can be reduced.

Creepage distance is the shortest path between two conductive parts or between a conductive part and the protective interface of the equipment, measured along an insulating surface.

By using the second hole 312 as the venting mechanism, the structure is simple. By providing an insulating layer on the inner wall of the second hole 312, the risk of affecting the creepage distance between the busbar member 430 and the battery cell 100 due to the conductivity of the inner wall of the second hole 312 can be reduced, thereby improving the safety of the battery 1001.

In some embodiments, the adhesive stopping structure 510 includes a rib-like strip 511 disposed on the first thermal management component 310.

The rib-like strip 511 refers to a strip-shaped structure such as a rib or a ridge protruding from an object.

The rib-like strip 511 is disposed on the first thermal management component 310 to form the adhesive stopping structure 510, thus facilitating the processing and manufacturing. In addition, when the first thermal management component 310 is connected to the first end surface 111, the adhesive stopping structure 510 may be located between the first thermal management component 310 and the first end surface 111, thus facilitating the assembly.

In some embodiments, the adhesive stopping structure 510 includes a rib-like strip 511 disposed on the first end surface 111. That is, the rib-like strip 511 may also be disposed on the first end surface 111 to form the adhesive stopping structure 510, and this also facilitates processing and manufacturing. In addition, when the first thermal management component 310 is connected to the first end surface 111, the adhesive stopping structure 510 may be located between the first thermal management component 310 and the first end surface 111, thus facilitating the assembly.

In some embodiments, the rib-like strip 511 may be disposed on both the first thermal management component 310 and the first end surface 111 to form the adhesive stopping structure 510.

In some embodiments, the rib-like strip 511 may be manufactured separately and then fixed to the first thermal management component 310 to simplify the structure of the first thermal management component 310 and facilitate the processing and manufacturing of the first thermal management component 310.

In some embodiments, the rib-like strip 511 may be integrally formed with the first thermal management component 310. That is, a protruding strip structure is provided on the first thermal management component 310 to form the rib-like strip 511, so as to facilitate the manufacturing and assembly of the rib-like strip 511 and the first thermal management component 310.

In some embodiments, the rib-like strip 511 may be manufactured separately and then fixed on the first end surface 111 to simplify the structure of the first end surface 111 of the battery cell 100 and facilitate the processing and manufacturing of the battery cell 100.

In some embodiments, the rib-like strip 511 may be integrally formed with the first end surface 111. That is, a protruding strip structure is provided on the first end surface 111 to form the rib-like strip 511, so as to facilitate the connection of the rib-like strip 511 to the first end surface 111.

In some embodiments, the rib-like strip 511 may be a sealing strip, and the sealing strip may be adhered to the first thermal management component 310.

The sealing strip refers to a strip-shaped structure disposed between two adjacent interfaces to seal a gap between the two interfaces. The sealing strip may be made of silica gel, plastic, rubber, metal, or other materials.

By using the sealing strip as the rib-like strip 511, the structure is simple, and the manufacturing is facilitated. The sealing strip is adhered to the first thermal management component 310. When the first thermal management component 310 is connected to the first end surface 111, the adhesive stopping structure 510 may be located between the first thermal management component 310 and the first end surface 111, thus facilitating the assembly.

In some embodiments, the rib-like strip 511 may be a sealing strip, and the sealing strip may be adhered to the first end surface 111.

By using the sealing strip as the rib-like strip 511, the structure is simple, and the manufacturing is facilitated. The sealing strip is adhered to the first end surface 111. When the first thermal management component 310 is connected to the first end surface 111, the adhesive stopping structure 510 may be located between the first thermal management component 310 and the first end surface 111, thus facilitating the assembly.

In some embodiments, the sealing strip may be disposed on both the first thermal management component 310 and the first end surface 111 to form the adhesive stopping structure 510.

In some embodiments, two opposite surfaces of the first thermal management component 310 and the inner wall of the first hole 311 are provided with an insulating layer.

The two opposite surfaces of the first thermal management component 310 refer to two surfaces at two ends of the first thermal management component 310 in the thickness direction.

The inner wall of the first hole 311 is an inner surface of the first hole 311, and is also an inner surface of a side wall of the first hole 311.

The insulating layer may be formed by spraying an insulating material onto the first thermal management component 310, or may be manufactured by a method such as attaching an insulating film material to the first thermal management component 310.

By providing the insulating layer on two surfaces of the first thermal management component 310 and the inner wall of the first hole 311, an insulating protection effect can be achieved, thereby reducing the risk of short circuits of the battery cell 100.

In some embodiments, the first thermal management component 310 may also be made of a material that has certain strength, is thermally conductive, and exhibits insulating property.

In some embodiments, the battery 1001 further includes a busbar member 430, and each electrode terminal 13 is connected to the busbar member 430 after passing through a corresponding first hole 311.

The busbar member 430 refers to a conductive member in the battery 1001 that is connected to the electrode terminal 13 of the battery cell 100. A plurality of battery cells 100 are connected in series, in parallel, or in series-parallel through the busbar member 430, and the battery cells 100 are discharged outwards through the busbar member 430, or the battery cells 100 are charged through the busbar member 430.

By allowing the electrode terminal 13 to be connected to the busbar member 430 after passing through the first hole 311, the conductive connection of the battery cell 100 is facilitated, thus facilitating the charging and discharging of the battery cell 100.

In some embodiments, the case 200 may include a lower case body 21 and a cover plate 22. The lower case body 21 and the cover plate 22 are lidded with each other to jointly define an accommodating space 201 for installing the battery cells 100, the first thermal management component 310, and other components. The lower case body 21 may be of a hollow structure with one end open, and the cover plate 22 may be of a plate-shaped structure. The cover plate 22 lids the open side of the lower case body 21, such that the cover plate 22 and the lower case body 21 jointly define the accommodating space 201. The lower case body 21 and the cover plate 22 may both be of a hollow structure with one side open, and the open side of the cover plate 22 lids the open side of the lower case body 21.

In some embodiments, when the case 200 includes the lower case body 21 and the cover plate 22 and the cover plate 22 is of a plate-shaped structure, the frames 202 are the side walls of the lower case body 21. When the lower case body 21 and the cover plate 22 are both of a hollow structure with one side open, a side wall of the lower case body 21 and the corresponding side wall of the cover plate 22 jointly form the frame 202 on one side of the case body 200.

In some embodiments, an insulating guard plate 410 is disposed between at least one first frame 2021 and the battery cell 100.

An insulating guard plate 410 being disposed between at least one first frame 2021 and the battery cell 100 means that an insulating guard plate 410 is disposed between one first frame 2021 and the adjacent battery cell 100, or insulating guard plates 410 are respectively disposed between two first frames 2021 and their adjacent battery cells 100.

The insulating guard plate 410 refers to a guard plate having insulation property. Providing the insulating guard plate 410 between the battery cell 100 and the first frame 2021 can provide cushioning, insulation, and thermal insulation effects. Moreover, the insulating guard plate 410 has insulation property, which can reduce the risk of short circuits of the battery cell 100 when the battery cell 100 expands and compresses the insulating guard plate 410. The insulating guard plate 410 may be made of a hard rubber pad, a hard buffering foam material, or the like.

For a battery cell 100 of a flat shape, a prismatic shape, or the like, the main body of the electrode plate is mostly a stack along the width direction. Therefore, when the battery cell 100 is charged and discharged, the expansion and deformation of the battery cell 100 in the width direction will also be large. Since the expansion and deformation of the battery cell 100 in the width direction is large and the first frame 2021 is located at one end of the battery cell 100 in the width direction, during the charging and discharging process of the battery cell 100, the battery cell 100 is in contact with the first frame 2021 due to the expansion and deformation and thus be compressed by the first frame 2021. However, providing the insulating guard plate 410 between the first frame 2021 of the case 200 and the battery cell 100 can provide effective cushioning, insulation, and thermal insulation effects to protect the battery cell 100, and can also provide a certain space for the expansion and deformation of the battery cell 100.

In some embodiments, insulating guard plates 410 are respectively disposed between the two first frames 2021 and their adjacent battery cells 100 to better provide cushioning, insulation, and thermal insulation effects, so as to protect the battery cells 100 and provide a certain space for the expansion and deformation of the battery cells 100.

In some embodiments, the insulating guard plate 410 may also be made of a heat preservation material, such as a polystyrene board, a foam, or the like, which may reduce the energy loss of the battery cells 100 in a low-temperature environment and improve the cold resistance of the battery cells 100.

In some embodiments, the second end surface 112 of the battery cell 100 is adhesively connected to the case 200 through a structural adhesive, and the first end surface 111 of the battery cell 100 is adhesively connected and fixed to the first thermal management component 310 through a thermally conductive structural adhesive.

The second end surface 112 is adhesively connected to the case 200, and the first end surface 111 is adhesively connected and fixed to the first thermal management component 310, such that the two end surfaces 11 of the battery cell 100 in the height direction Z1 can be fixed to more stably support the battery cell 100. In addition, this can allow a plurality of battery cells 100 to be better connected into a single unit, thereby effectively resisting the expansion and deformation of the battery cells 100, reducing the risk of failure of the battery cells 100 due to expansion and deformation, and improving the overall structural strength of the battery 1001.

In some embodiments, a plurality of battery cells 100 are arranged in an array in the case 200. For example, it can be defined that the plurality of battery cells 100 are arranged in rows along the width direction Y of the case 200, and the plurality of battery cells 100 are arranged in columns along the length direction X of the case 200.

The arrangement of the plurality of battery cells 100 in rows along the width direction Y of the case 200 means that the plurality of battery cells 100 are arranged in rows, and the rows of battery cells 100 are sequentially arranged along the width direction Y of the case 200.

The arrangement of the plurality of battery cells 100 in columns along the length direction X of the case 200 means that the plurality of battery cells 100 are arranged in columns, and the columns of battery cells 100 are sequentially arranged along the length direction X of the case 200.

Generally, the length of the battery 1001 is usually set to be greater than the width of the battery 1001. By allowing the width direction Y1 of the battery cell 100 to be parallel to the width direction Y of the case 200, a quantity of battery cells 100, corresponding to the number that fits the width of the case 200, are grabbed at one time, such that the number of battery cells 100 to be grabbed is smaller, thus facilitating the grabbing.

By allowing the width direction Y1 of the battery cell 100 to be parallel to the width direction Y of the case 200, the positioning of the battery cell 100 with the case 200 can be facilitated, thus facilitating the mounting of the battery cell 100.

By allowing the width direction Y1 of the battery cell 100 to be parallel to the width direction Y of the case 200, a quantity of battery cells 100, corresponding to the number that fits the width of the case 200, are grabbed at one time to be assembled in the case 200, thereby improving the assembly efficiency.

Arranging the battery cells 100 in an array in the case 200 facilitates the arrangement and mounting of the battery cells 100.

In some embodiments, the battery cells 100 in the case 200 may be arranged in only one row. For example, when the length of each battery cell 100 is long, one row of battery cells 100 may be arranged in the case 200. Certainly, a plurality of rows of battery cells 100 may also be arranged in the case 200, and the plurality of rows of battery cells 100 are sequentially arranged along the length direction X of the case 200. For example, two adjacent rows of battery cells 100 are arranged along the length direction X of the case 200. A plurality of rows means two or more rows.

In some embodiments, the battery cells 100 in the case 200 may be arranged in a plurality of columns, and the plurality of columns of battery cells 100 are sequentially arranged along the width direction Y of the case 200. For example, two adjacent columns of battery cells 100 are arranged along the length direction X of the case 200. The plurality of columns means two or more columns.

In some embodiments, when the electric device using the battery 1001 is a vehicle, the vehicle includes a vehicle frame. The vehicle frame includes a crossbeam and a longitudinal beam, where the crossbeam is arranged along the left-right direction of the vehicle, and the longitudinal beam is arranged along the front-rear direction of the vehicle. The battery 1001 may be mounted on the vehicle frame, and the large surface of the battery cell 100 may be parallel to the crossbeam of the vehicle; that is, the length direction X1 of the battery cell 100 in the battery 1001 is parallel to the crossbeam of the vehicle frame.

In some embodiments, when the electric device using the battery 1001 is a vehicle, the vehicle includes a vehicle frame. The vehicle frame includes a crossbeam and a longitudinal beam, where the crossbeam is arranged along the left-right direction of the vehicle, and the longitudinal beam is arranged along the front-rear direction of the vehicle. The battery 1001 may be mounted on the vehicle frame, and the large surface of the battery cell 100 may be parallel to the longitudinal beam of the vehicle; that is, the length direction X1 of the battery cell 100 in the battery 1001 is parallel to the longitudinal beam of the vehicle frame.

In some embodiments, the battery 1001 further includes a battery management system 420 (BMS). The battery management system 420 is mounted in the case 200 and the battery management system 420 is protected by the case 200.

The battery management system 420 is an apparatus configured to monitor, control, and optimize the battery 1001. It can monitor the state, capacity, and health of the battery 1001 in real time to ensure the safe operation of the battery 1001 and maximize its service life. The battery management system 420 may further optimize the performance and efficiency of the battery 1001 through charging and discharging control, thereby improving energy utilization rate.

In some embodiments, the battery management system 420 may be arranged at one end of the case 200 in the length direction X, thus facilitating the mounting of the battery management system 420.

In some embodiments, the case 200 is provided with a receiving space 2012 to accommodate the battery management system 420. The receiving space 2012 is a space defined in the case 200.

In some embodiments, the case 200 is further provided with a reinforcing beam 24 to increase the structural strength of the case 200.

In some embodiments, the case 200 is provided therein with a reinforcing beam 24, the reinforcing beam 24 is located at one end part of the case 200 in the length direction X, and the reinforcing beam 24 divides the accommodating space 201 of the case 200 into a receiving space 2012 and a mounting space 2011. The battery cells 100 are mounted in the mounting space 2011, and the battery management system 420 is mounted in the receiving space 2012. The battery management system 420 and the battery cells 100 are separated by the reinforcing beam 24, such that the mutual influence between the battery management system 420 and the battery cells 100 can be reduced, thereby improving the safety, and facilitating the stable operation of the battery management system 420 and the battery cells 100.

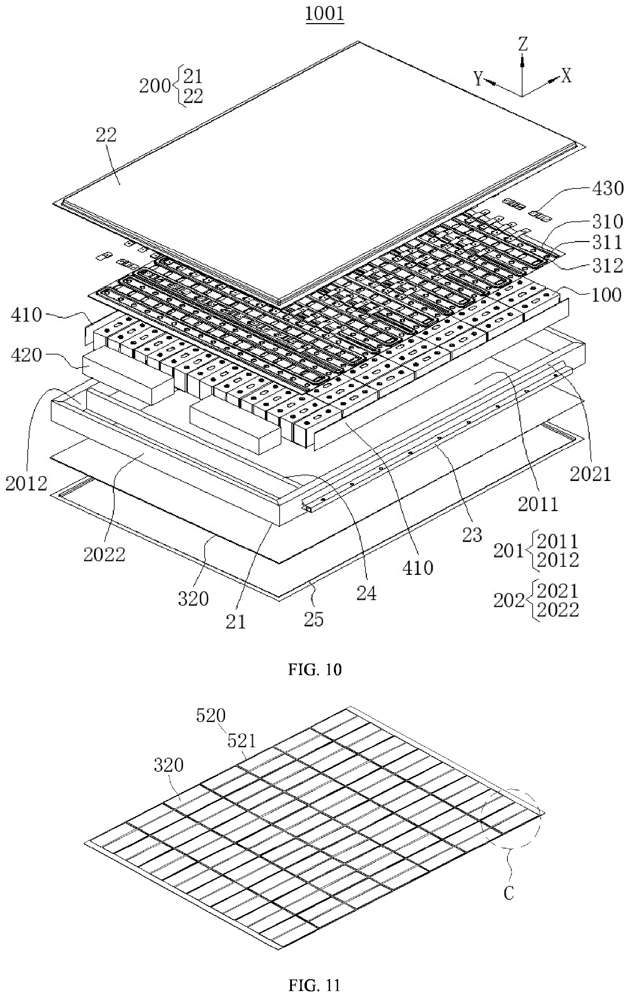

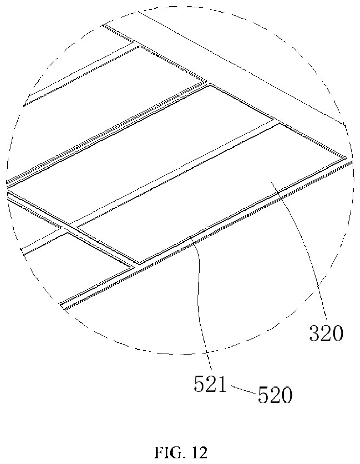

Referring to FIGs. 10 to 12, FIG. 10 is a schematic diagram of an exploded structure of a battery 1001 according to some embodiments of the present application. FIG. 11 is a schematic structural diagram of a second thermal management component 320 according to some embodiments of the present application. FIG. 12 is an enlarged view of portion C in FIG. 10.

In some embodiments, one end of the battery cell 100 along the height direction has a second end surface 112, and the thermal management component includes a second thermal management component 320. The second thermal management component 320 is disposed in the case 200, and each second end surface 112 is connected to the second thermal management component 320.

The second thermal management component 320 refers to a thermal management component disposed on the second end surface 112 side of the battery cell 100. For example, the second thermal management component 320 may be a plate-like member, such as a liquid cooling plate, having a flow channel provided inside for enabling coolant liquid such as water and oil to flow for heat exchange. The second thermal management component 320 may also be a component that can perform heat exchange, such as a semiconductor cooling device. When a flow channel is present inside the second thermal management component 320 and the temperature of the coolant liquid passing through the flow channel of the second thermal management component 320 is higher than that of an object in heat conducting connection with the second thermal management component 320, the second thermal management component 320 may heat the object. When the temperature of the coolant liquid passing through the second thermal management component 320 is lower than that of the object in heat conducting connection with the second thermal management component 320, the second thermal management component 320 may cool the object to dissipate heat.

Each second end surface 112 being connected to the second thermal management component 320 means that the second end surface 112 of each battery cell 100 is connected to the second thermal management component 320 to support the battery cell 100 through the second thermal management component 320, and the heat conducting connection between the second end surface 112 and the second thermal management component 320 can be achieved.

By providing the second thermal management component 320 and connecting it to the second end surface 112, the battery cell 100 can be heated or cooled through the second thermal management component 320, such that the temperature environment of the battery cell 100 is stable.

In some embodiments, each second end surface 112 is adhesively connected and fixed to the second thermal management component 320 through a thermally conductive structural adhesive.

The second end surface 112 refers to a surface of the battery cell 100 distal to the first end surface 111 along the height direction Z1.

The second end surface 112 of each battery cell 100 is adhesively connected and fixed to the second thermal management component 320 through a thermally conductive structural adhesive to connect the plurality of battery cells 100 into a single unit, thereby resisting the expansion and deformation of the battery cells 100, reducing the risk of failure of the battery cells 100 due to expansion and deformation, and improving the overall structural strength of the battery 1001.

In some embodiments, the battery 1001 further includes an adhesive blocking structure 520 disposed around the edge of each second end surface 112 and configured to prevent the structural adhesive on the second end surface 112 from flowing into a gap between adjacent battery cells 100.

The adhesive blocking structure 520 refers to a structure for blocking liquid adhesive to define the flow range of the liquid adhesive. By providing the adhesive blocking structure 520 between the second end surface 112 of the battery cell 100 and the second thermal management component 320, the flow of the thermally conductive structural adhesive can be restricted through the adhesive blocking structure 520, thereby well reducing the overflow of the thermally conductive structural adhesive.

Disposing the adhesive blocking structure 520 around the edge of each second end surface 112 means that the edge of the second end surface 112 is surrounded by the adhesive blocking structure 520. When the thermally conductive structural adhesive is arranged on the second end surface 112 to allow the second end surface to be adhesively connected and fixed to the second thermal management component 320, the adhesive blocking structure 520 can effectively prevent the thermally conductive structural adhesive from flowing to the side surface 12 of the battery cell 100.

If the thermally conductive structural adhesive flows to the side surface 12 of the battery cell 100, once cured, its high strength will restrict the normal expansion and deformation of the battery cell 100 during charging and discharging, thereby affecting the service life of the battery cell 100. Therefore, allowing the adhesive blocking structure 520 to surround the edge of the second end surface 112 of the battery cell 100 can effectively prevent the thermally conductive structural adhesive from flowing to the side surface 12 of the battery cell 100, such that the battery cell 100 can undergo normal expansion and deformation during charging and discharging.

Providing the adhesive blocking structure 520 and allowing the adhesive blocking structure 520 to surround the edge of each second end surface 112 can prevent the thermally conductive structural adhesive from overflowing to the side surface 12 of the battery cell 100, so as to reduce the risk of a situation where the presence of cured thermally conductive structural adhesive between adjacent battery cells 100 affects the normal expansion and deformation of battery cells 100 during charging and discharging and thereby the service life of the battery cells 100 is shortened.

In some embodiments, the adhesive blocking structure 520 includes a ridge-like strip 521 disposed on the second thermal management component 320.

The ridge-like strip 521 refers to a strip-shaped structure such as a rib or a ridge protruding from an object.

The ridge-like strip 521 is disposed on the second thermal management component 320 to form the adhesive blocking structure 520, thus facilitating the processing and manufacturing. In addition, when the second thermal management component 320 is connected to the second end surface 112, the adhesive blocking structure 520 may be located between the second thermal management component 320 and the second end surface 112, thus facilitating the assembly.

In some embodiments, the adhesive blocking structure 520 includes a ridge-like strip 521 disposed on the second end surface 112. That is, the ridge-like strip 521 may also be disposed on the second end surface 112 to form the adhesive blocking structure 520, and this also facilitates the processing and manufacturing. In addition, when the second thermal management component 320 is connected to the second end surface 112, the adhesive blocking structure 520 may be located between the second thermal management component 320 and the second end surface 112, thus facilitating the assembly.

In some embodiments, the ridge-like strip 521 may be disposed on both the second thermal management component 320 and the second end surface 112 to form the adhesive blocking structure 520.

In some embodiments, the ridge-like strip 521 may be manufactured separately and then fixed to the second thermal management component 320 to simplify the structure of the second thermal management component 320 and facilitate the processing and manufacturing of the second thermal management component 320.

In some embodiments, the ridge-like strip 521 may be integrally formed with the second thermal management component 320. That is, a protruding strip structure is provided on the second thermal management component 320 to form the ridge-like strip 521, so as to facilitate the manufacturing and assembly of the ridge-like strip 521 and the second thermal management component 320.

In some embodiments, the ridge-like strip 521 may be manufactured separately and then fixed on the second end surface 112 to simplify the structure of the second end surface 112 of the battery cell 100 and facilitate the processing and manufacturing of the battery cell 100.

In some embodiments, the ridge-like strip 521 may be integrally formed with the second end surface 112. That is, a protruding strip structure is provided on the second end surface 112 to form the ridge-like strip 521, so as to facilitate the connection of the ridge-like strip 521 to the second end surface 112.

In some embodiments, the ridge-like strip 521 may be a partition strip, and the partition strip may be adhered to the second thermal management component 320.

The partition strip refers to a strip-shaped structure disposed between two adjacent interfaces to seal a gap between the two interfaces. The partition strip may be made of silica gel, plastic, rubber, metal, or other materials.

By using the partition strip as the ridge-like strip 521, the structure is simple, and the manufacturing is facilitated. The partition strip is adhered to the second thermal management component 320. When the second thermal management component 320 is connected to the second end surface 112, the adhesive blocking structure 520 may be located between the second thermal management component 320 and the second end surface 112, thus facilitating the assembly.

In some embodiments, the ridge-like strip 521 may be a partition strip, and the partition strip may be adhered to the second end surface 112.

By using the partition strip as the ridge-like strip 521, the structure is simple, and the manufacturing is facilitated. The partition strip is adhered to the second end surface 112. When the second thermal management component 320 is connected to the second end surface 112, the adhesive blocking structure 520 may be located between the second thermal management component 320 and the second end surface 112, thus facilitating the assembly.

In some embodiments, the partition strip may be disposed on both the second thermal management component 320 and the second end surface 112 to form the adhesive blocking structure 520.

In some embodiments, the second thermal management component 320 may be used as a part of the case 200, and the second end surface 112 being adhesively connected and fixed to the second thermal management component 320 through a thermally conductive structural adhesive actually means that the second end surface 112 is also fixedly connected to the case 200 through the thermally conductive structural adhesive. In some embodiments, when the second thermal management component 320 is used as a part of the case 200, the adhesive blocking structure 520 between the second thermal management component 320 and the second end surface 112 is actually the adhesive blocking structure 520 provided between the case 200 and the second end surface 112.

In some embodiments, when the second thermal management component 320 is not provided in the case 200, the second end surface 112 of the battery cell 100 may be connected to the case 200 to stably support the battery cell 100 and provide a constraining force to the battery cell 100 through the case 200, thus resisting the expansion and deformation of the battery cell 100.

In some embodiments, the second end surface 112 is fixedly connected to the case 200 through a structural adhesive, and the battery 1001 further includes an adhesive blocking structure 520 disposed around the edge of each second end surface 112 and configured to prevent the structural adhesive on the second end surface 112 from flowing into a gap between adjacent battery cells 100.

Allowing the second end surface 112 to be fixedly connected to the case 200 through a structural adhesive can ensure firm connection between the second end surface 112 and the case 200, such that when the battery cell 100 expands and deforms, the case 200 can constrain the second end surface 112 to resist the expansion and deformation of the battery cell 100.

The adhesive blocking structure 520 refers to a structure for blocking liquid adhesive to define the flow range of the liquid adhesive. By providing the adhesive blocking structure 520 between the second end surface 112 of the battery cell 100 and the case 200, the flow of the thermally conductive structural adhesive can be restricted through the adhesive blocking structure 520, thereby well reducing the overflow of the thermally conductive structural adhesive.

Disposing the adhesive blocking structure 520 around the edge of each second end surface 112 means that the edge of the second end surface 112 is surrounded by the adhesive blocking structure 520. When the thermally conductive structural adhesive is arranged on the second end surface 112 to allow the second end surface to be adhesively connected and fixed to the case 200, the adhesive blocking structure 520 can effectively prevent the thermally conductive structural adhesive from flowing to the side surface 12 of the battery cell 100.

If the thermally conductive structural adhesive flows to the side surface 12 of the battery cell 100, once cured, its high strength will restrict the normal expansion and deformation of the battery cell 100 during charging and discharging, thereby affecting the service life of the battery cell 100. Therefore, allowing the adhesive blocking structure 520 to surround the edge of the second end surface 112 of the battery cell 100 can effectively prevent the thermally conductive structural adhesive from flowing to the side surface 12 of the battery cell 100, such that the battery cell 100 can undergo normal expansion and deformation during charging and discharging.

Providing the adhesive blocking structure 520 and allowing the adhesive blocking structure 520 to surround the edge of each second end surface 112 can prevent the structural adhesive from overflowing to the side surface 12 of the battery cell 100, so as to reduce the risk of a situation where the presence of cured structural adhesive between adjacent battery cells 100 affects the normal expansion and deformation of battery cells 100 during charging and discharging and thereby the service life of the battery cells 100 is shortened.

In some embodiments, the adhesive blocking structure 520 includes a ridge-like strip 521 disposed on the case 200.

The ridge-like strip 521 refers to a strip-shaped structure such as a rib or a ridge protruding from an object.

The ridge-like strip 521 is disposed on the case 200 to form the adhesive blocking structure 520, thus facilitating the processing and manufacturing. In addition, when the case 200 is connected to the second end surface 112, the adhesive blocking structure 520 may be located between the case 200 and the second end surface 112, thus facilitating the assembly.

In some embodiments, the adhesive blocking structure 520 includes a ridge-like strip 521 disposed on the second end surface 112. That is, the ridge-like strip 521 may also be disposed on the second end surface 112 to form the adhesive blocking structure 520, and this also facilitates the processing and manufacturing. In addition, when the case 200 is connected to the second end surface 112, the adhesive blocking structure 520 may be located between the case 200 and the second end surface 112, thus facilitating the assembly.

In some embodiments, the ridge-like strip 521 may be disposed on both the case 200 and the second end surface 112 to form the adhesive blocking structure 520.

In some embodiments, the ridge-like strips 521 may be made separately and then fixed to the case 200 to simplify the structure of the case 200 and facilitate the processing and manufacturing of the case 200.

In some embodiments, the ridge-like strip 521 may be integrally formed with the case 200. That is, a protruding strip structure is provided on the case 200 to form the ridge-like strip 521, so as to facilitate the manufacturing and assembly of the ridge-like strip 521 and the case 200.

In some embodiments, the ridge-like strip 521 may be manufactured separately and then fixed on the second end surface 112 to simplify the structure of the second end surface 112 of the battery cell 100 and facilitate the processing and manufacturing of the battery cell 100.

In some embodiments, the ridge-like strip 521 may be integrally formed with the second end surface 112. That is, a protruding strip structure is provided on the second end surface 112 to form the ridge-like strip 521, so as to facilitate the connection of the ridge-like strip 521 to the second end surface 112.

In some embodiments, the ridge-like strip 521 may be a partition strip, and the partition strip may be adhered to the case 200.

The partition strip refers to a strip-shaped structure disposed between two adjacent interfaces to seal a gap between the two interfaces. The partition strip may be made of silica gel, plastic, rubber, metal, or other materials.

By using the partition strip as the ridge-like strip 521, the structure is simple, and the manufacturing is facilitated. The partition strip is adhered to the case 200. When the case 200 is connected to the second end surface 112, the adhesive blocking structure 520 may be located between the case 200 and the second end surface 112, thus facilitating the assembly.

In some embodiments, the ridge-like strip 521 may be a partition strip, and the partition strip may be adhered to the second end surface 112.

By using the partition strip as the ridge-like strip 521, the structure is simple, and the manufacturing is facilitated. The partition strip is adhered to the second end surface 112. When the case 200 is connected to the second end surface 112, the adhesive blocking structure 520 may be located between the case 200 and the second end surface 112, thus facilitating the assembly.

In some embodiments, the partition strip may be disposed on both the case 200 and the second end surface 112 to form the adhesive blocking structure 520.

In some embodiments, the battery cell 100 is mounted in the lower case body 21, and the second end surface 112 is adhesively connected and fixed to the bottom of the lower case body 21.

In some embodiments, the second end surface 112 may be adhesively connected and fixed to the cover plate 22.

In some embodiments, the battery 1001 further includes a bottom plate 25, and the bottom plate 25 is mounted at the bottom of the case 200, thus protecting the case 200 through the bottom plate 25. The bottom plate may also play a certain buffering role when the case 200 is subjected to an impact.

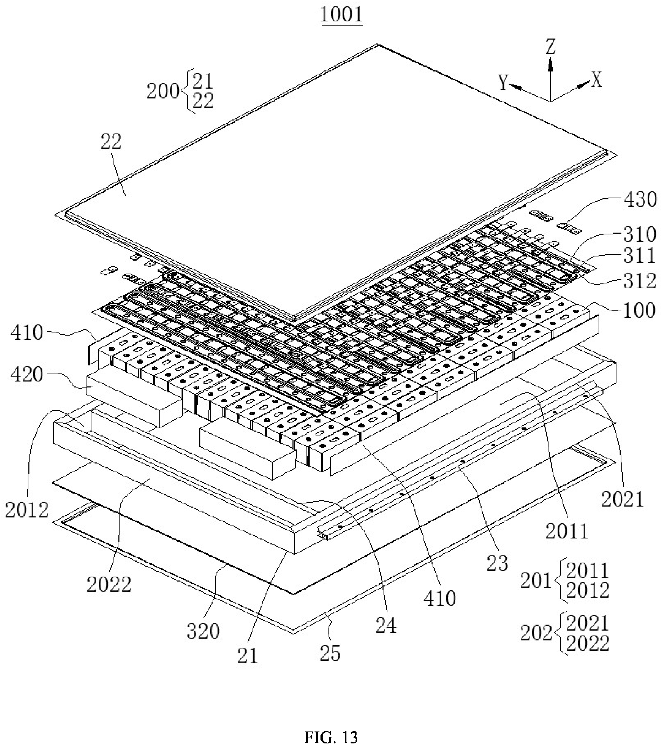

Referring to FIG. 13, FIG. 13 is a schematic diagram of an exploded structure of a battery 1001 according to some embodiments of the present application. In some embodiments, the thermal management component includes a first thermal management component 310 and a second thermal management component 320, the first end surface 111 of the battery cell 100 is adhesively connected and fixed to the first thermal management component 310 through a thermally conductive structural adhesive, and the second thermal management component 320 is connected to the second end surface 112. The battery cell 100 is heated or cooled through the first thermal management component 310 and the second thermal management component 320, such that the temperature environment of the battery cell 100 is more stable, and especially a more stable temperature environment is provided for the battery cell 100's high-rate fast charging at 4C or above.

In some embodiments, referring to FIG. 13, the thermal management component includes a first thermal management component 310 and a second thermal management component 320. The first end surface 111 of the battery cell 100 is adhesively connected and fixed to the first thermal management component 310 through a thermally conductive structural adhesive, and the second end surface 112 is fixedly connected to the second thermal management component 320 through a thermally conductive structural adhesive. Allowing the second end surface 112 to be fixedly connected to the second thermal management component 320 through a thermally conductive structural adhesive can ensure firm connection between the second end surface 112 and the second thermal management component 320, such that when the battery cell 100 expands and deforms, the second thermal management component 320 can constrain the second end surface 112 to resist the expansion and deformation of the battery cell 100. The first end surface 111 of each battery cell 100 is adhesively connected and fixed to the first thermal management component 310, such that the second thermal management component 320 can cooperate with the first thermal management component 310 to more effectively resist the expansion and deformation of the battery cells 100, thereby reducing the risk of failure of the battery cell 100 due to expansion and deformation, and improving the overall structural strength of the battery 1001.

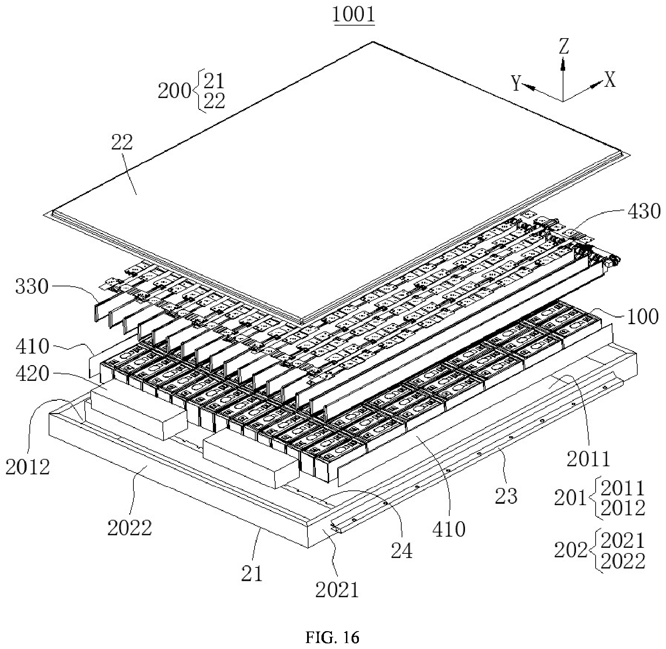

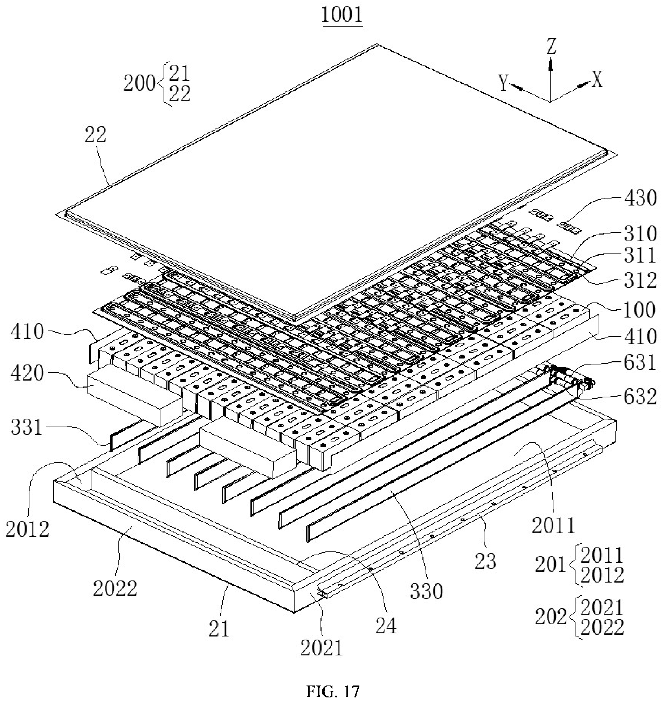

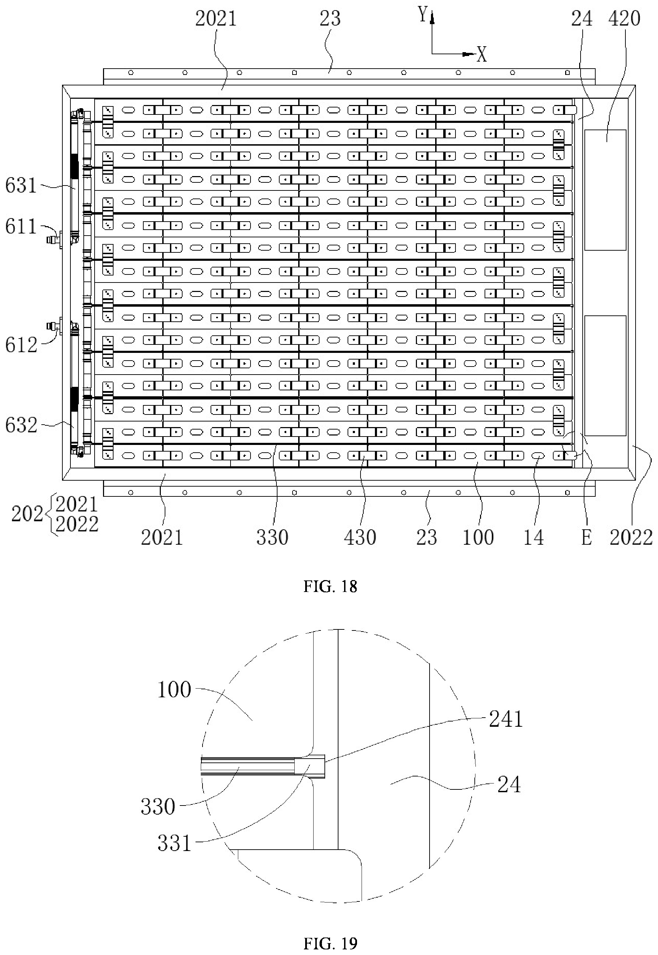

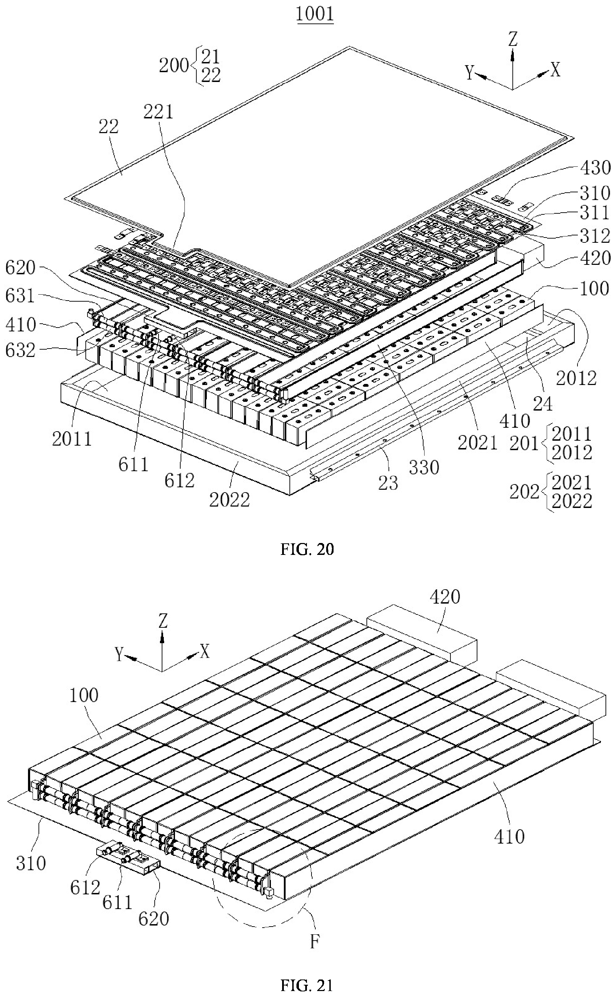

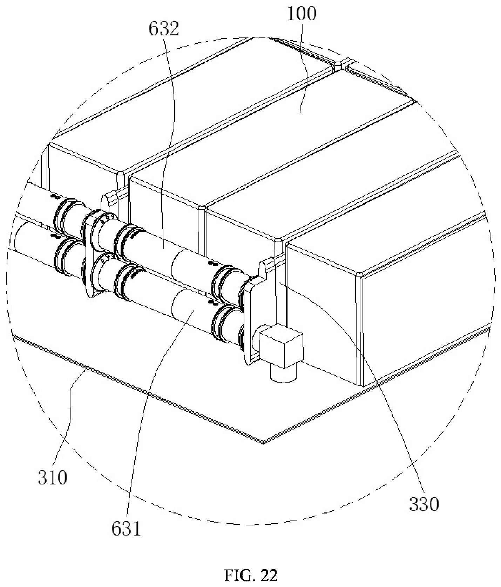

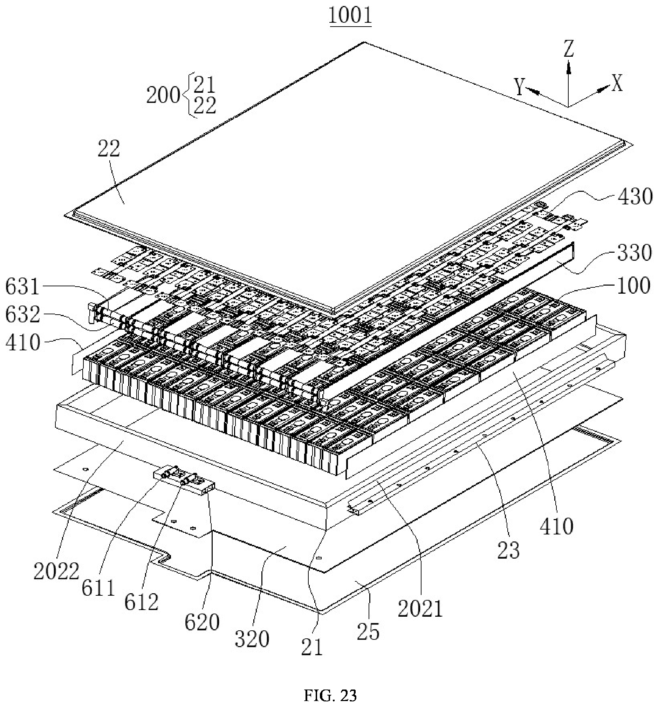

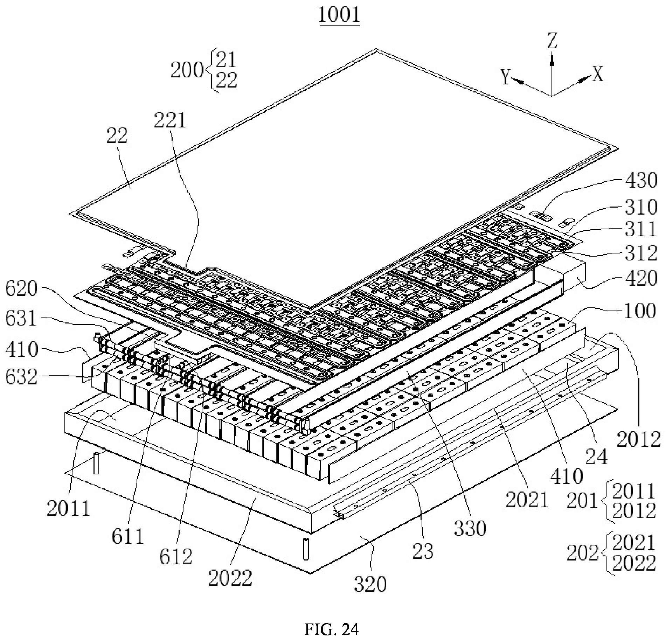

Referring to FIGs. 16 to 24, FIG. 16 is a schematic diagram of an exploded structure of a battery 1001 according to some embodiments of the present application. FIG. 17 is a schematic diagram of an exploded structure of a battery 1001 according to some other embodiments of the present application. FIG. 18 is a schematic diagram of part of the structure of the battery 1001 in FIG. 17. FIG. 19 is an enlarged view of portion E in FIG. 18. FIG. 20 is a schematic diagram of an exploded structure of a battery 1001 according to some other embodiments of the present application. FIG. 21 is a schematic diagram of part of the structure of the battery 1001 in FIG. 20. FIG. 22 is an enlarged view of portion F in FIG. 21. FIG. 23 is a schematic diagram of an exploded structure of a battery 1001 according to still some embodiments of the present application. FIG. 24 is a schematic diagram of an exploded structure of a battery 1001 according to some other embodiments of the present application.

In some embodiments, a plurality of battery cells 100 are arranged in an array; the thermal management component includes a third thermal management component 330 configured to be suitably disposed between two adjacent columns or two adjacent rows of battery cells 100, the battery cell 100 includes a plurality of surfaces, and the third thermal management component 330 is in heat exchange connection with a surface with the largest area among the plurality of surfaces of the battery cell 100.

The third thermal management component 330 refers to a thermal management component disposed on a side of the battery cell 100. For example, the third thermal management component 330 may be a plate-like member, such as a liquid cooling plate, having a flow channel provided inside for enabling coolant liquid such as water and oil to flow for heat exchange. The third thermal management component 330 may also be a component that can perform heat exchange, such as a semiconductor cooling device. When a flow channel is present inside the third thermal management component 330 and the temperature of the coolant liquid passing through the flow channel of the third thermal management component 330 is higher than that of an object in heat conducting connection with the third thermal management component 330, the third thermal management component 330 may heat the object. When the temperature of the coolant liquid passing through the third thermal management component 330 is lower than that of the object in heat conducting connection with the third thermal management component 330, the third thermal management component 330 may cool the object to dissipate heat.

The heat exchange connection may also be referred to as the heat conducting connection. Since the third thermal management component 330 is in heat exchange connection with the surface with the largest area among the plurality of surfaces of the battery cell 100, the third thermal management component 330 may control the temperature of the battery cell 100 through the surface with the largest area of the battery cell 100.

The plurality of battery cells 100 being arranged in an array may be that the plurality of battery cells 100 are arranged in rows along the width direction Y of the case 200, and the plurality of battery cells 100 are arranged in columns along the length direction X of the case 200. Certainly, the plurality of battery cells 100 being arranged in an array may also be that the plurality of battery cells 100 are arranged in columns along the width direction Y of the case 200, and the plurality of battery cells 100 are arranged in rows along the length direction X of the case 200.

When the columns of battery cells 100 are sequentially arranged along the length direction X of the case 200 and the length direction X1 of the battery cell 100 is consistent with the length direction X of the case 200, the large surface (the second side surface 122) of the battery cell 100 is parallel to the length direction X of the case 200; a third thermal management component 330 is arranged between two adjacent columns of battery cells 100, such that the third thermal management component 330 is in heat exchange connection with the large surface of the battery cell 100, thus facilitating the heat dissipation of the battery cell 100.

When the rows of battery cells 100 are sequentially arranged along the length direction X of the case 200, the length direction X1 of the battery cell 100 is consistent with the length direction X of the case 200, the large surface (the second side surface 122) of the battery cell 100 is parallel to the length direction X of the case 200; a third thermal management component 330 is arranged between two adjacent rows of battery cells 100, such that the third thermal management component 330 is in heat exchange connection with the large surface of the battery cell 100, thus facilitating the heat dissipation of the battery cell 100.

The large surface of the battery cell 100 refers to a surface with the largest area on the battery cell 100.

In some embodiments, the battery cells 100 are arranged in an array, and the third thermal management component 330 needs to be arranged on the side where the large surface of the battery cell 100 is located. That is, the third thermal management component 330 may be arranged based on the arrangement of the battery cells 100. For example, if the surfaces with the largest area of the battery cells 100 are located between two corresponding adjacent columns of battery cells 100, the third thermal management component 330 is arranged between the two adjacent columns of battery cells 100, such that the third thermal management component 330 is in heat exchange connection with the surfaces with the largest area of the battery cells 100; if the surfaces with the largest area of the battery cells 100 are located between two corresponding adjacent rows of battery cells 100, the third thermal management component 330 is arranged between the two adjacent rows of battery cells 100, such that the third thermal management component 330 is in heat exchange connection with the surfaces with the largest area of the battery cells 100.

By providing the third thermal management component 330 between two adjacent columns or two adjacent rows of battery cells 100, the battery cells 100 can be heated or subjected to heat dissipation through the third thermal management component 330. By allowing the third thermal management component 330 to be in heat exchange connection with the surface with the largest area among the plurality of surfaces of the battery cell 100, the third thermal management component 330 can be in heat conducting connection with the large surface of the battery cell 100 to increase the heat conducting connection area between the third thermal management component 330 and the battery cell 100, thus heating the battery cell 100 or dissipating its heat more efficiently.

Referring to FIG. 16, in some embodiments, the third thermal management component 330 is disposed between any two adjacent columns or any two adjacent rows of battery cells 100.

Since the third thermal management component 330 is arranged between any two adjacent columns or any two adjacent rows of battery cells 100, among the battery cells 100 in the array, the two columns or two rows of battery cells 100 at the end parts are each in heat conducting connection with one third thermal management component 330, while the remaining columns or remaining rows of battery cells 100 are each in heat conducting connection with two third thermal management components 330, such that the heat conducting connection area between the battery cells 100 and the third thermal management components 330 in the case 200 is large to better regulate and control the temperature of the battery cells 100. In addition, the battery cells 100 can be heated or cooled by the first thermal management component 310 and the third thermal management components 330, such that the temperature environment of the battery cells 100 is more stable, and especially a more stable temperature environment is provided for the battery cells 100's high-rate fast charging at 4C or above.

Referring to FIGs. 17 and 18, in some embodiments, one side of each column of battery cells 100 is provided with the third thermal management component 330, and two adjacent third thermal management components 330 are spaced apart with two columns of battery cells 100 therebetween.

One side of each column of battery cells 100 being provided with the third thermal management component 330 means that only one side of a column of battery cells 100 is provided with the third thermal management component 330.

Since two adjacent third thermal management components 330 are spaced apart with two columns of battery cells 100 therebetween, one third thermal management component 330 is arranged at every interval of two columns of battery cells 100.

Since the third thermal management component 330 is arranged on one side of each column of battery cells 100, the battery cells 100 in each column are in heat conducting connection with one third thermal management component 330, such that the temperature of each battery cell 100 can be regulated and controlled through the third thermal management component 330. In addition, the battery cells 100 can be heated or cooled by the first thermal management component 310 and the third thermal management components 330, such that the temperature environment of the battery cells 100 is more stable, and especially a more stable temperature environment is provided for the battery cells 100's high-rate fast charging at 4C or above.

In some embodiments, one side of each row of battery cells 100 is provided with the third thermal management component 330, and two adjacent third thermal management components 330 are spaced apart with two rows of battery cells 100 therebetween.

One side of each row of battery cells 100 being provided with the third thermal management component 330 means that only one side of a column of battery cells 100 is provided with the third thermal management component 330.

Since two adjacent third thermal management components 330 are spaced apart with two rows of battery cells 100 therebetween, one third thermal management component 330 is arranged at every interval of two rows of battery cells 100.

Since the third thermal management component 330 is arranged on one side of each row of battery cells 100, the battery cells 100 in each row are in heat conducting connection with one third thermal management component 330, such that the temperature of each battery cell 100 can be regulated and controlled through the third thermal management component 330. In addition, the battery cells 100 can be heated or cooled by the first thermal management component 310 and the third thermal management components 330, such that the temperature environment of the battery cells 100 is more stable, and especially a more stable temperature environment is provided for the battery cells 100's high-rate fast charging at 4C or above.

In some embodiments, the battery 1001 further includes a liquid distribution tube 631 connected to one end of the flow channel of each third thermal management component 330 and a liquid return tube 632 connected to the other end of the flow channel of each third thermal management component 330.

The liquid distribution tube 631 refers to a tube configured to distribute the coolant liquid to the flow channel of each third thermal management component 330. The liquid distribution tube 631 is in communication with each third thermal management component 330.

The liquid return tube 632 is a tube used for the return flow of the coolant liquid from the flow channel of each third thermal management component 330. The liquid return tube 632 is in communication with each third thermal management component 330.

The liquid distribution tube 631 and the liquid return tube 632 are arranged to be respectively connected to two ends of the flow channel of the third thermal management component 330, so as to facilitate the supply of the coolant liquid to each third thermal management component 330.

In some embodiments, one end of the liquid distribution tube 631 distal to the third thermal management component 330 may extend out of the case 200, so as to be connected to an external coolant liquid supply system. One end of the liquid return tube 632 distal to the third thermal management component 330 may extend out of the case 200, so as to be connected to an external coolant liquid return system.

In some embodiments, the liquid distribution tube 631 and the liquid return tube 632 are located at the same end of the third thermal management component 330.

The liquid distribution tube 631 and the liquid return tube 632 are arranged at the same end of the third thermal management component 330, such that the liquid distribution tube 631 and the liquid return tube 632 can be easily led out, so as to be connected to an external coolant liquid supply system.

Referring to FIGs. 18 and 19, in some embodiments, the third thermal management component 330 is provided with two flow channel sets, one end of the third thermal management component 330 is provided with a flow collecting member 331, and the flow collecting member 331 is in communication with the two flow channel sets.

The flow collecting member 331 refers to a structural member provided therein with a channel to allow the two flow channel sets in the third thermal management component 330 to be in communication with each other and thereby allow the two flow channel sets in the third thermal management component 330 to form a loop.

Two flow channel sets are disposed in the third thermal management component 330, and the flow collecting member 331 is provided to connect the two flow channel sets, thus facilitating the processing and manufacturing of the third thermal management component 330 and reducing the processing and manufacturing difficulty of the third thermal management component 330.

In some embodiments, the case 200 is provided therein with a reinforcing beam 24, and the case 200 is provided therein with a third thermal management component 330. The reinforcing beam 24 extends along a direction perpendicular to the length direction of the third thermal management component 330, the reinforcing beam 24 is provided with an accommodating groove 241 configured to accommodate the flow collecting member 331, and the flow collecting member 331 is arranged in the corresponding accommodating groove 241.

The reinforcing beam 24 refers to a beam structure disposed in the case 200 to increase the structural strength of the case 200.

The accommodating groove 241 refers to a groove structure disposed on the reinforcing beam 24.

When the third thermal management component 330 is mounted, the flow collecting member 331 is located at one end of the third thermal management component 330 proximal to the reinforcing beam 24; in addition, the reinforcing beam 24 is provided with the accommodating groove 241, and the flow collecting member 331 of the third thermal management component 330 may be arranged in the corresponding accommodating groove 241. This can reduce the distance between the reinforcing beam 24 and the battery cell 100, improve the space utilization rate of the case 200, enhance the overall integration of the battery 1001, and improve the energy density.

The reinforcing beam 24 is arranged in the case 200 to increase the structural strength of the battery 1001. The accommodating groove 241 is arranged on the reinforcing beam 24, and the flow collecting member 331 of the third thermal management component 330 is arranged in the corresponding accommodating groove 241. This can reduce the distance between the reinforcing beam 24 and the battery cell 100, improve the space utilization rate of the case 200, enhance the overall integration of the battery 1001, and improve the energy density.

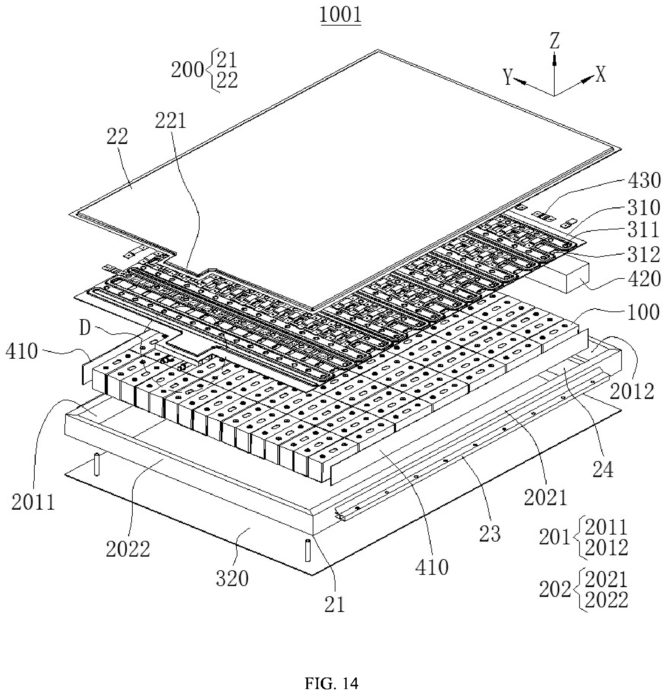

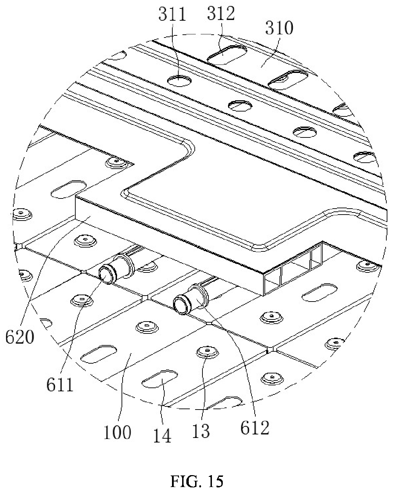

Referring to FIGs. 14 and 15, FIG. 14 is a schematic diagram of an exploded structure of a battery 1001 according to some embodiments of the present application. FIG. 15 is an enlarged view of portion D in FIG. 14. Referring to FIG. 18 and FIGs. 20 to 24,
in some embodiments, a liquid inlet tube 611 and a liquid outlet tube 612 are mounted on the case 200. The liquid inlet tube 611 is in communication with one end of the flow channel in the thermal management component, and the liquid outlet tube 612 is in communication with the other end of the flow channel in the thermal management component.

The liquid inlet tube 611 refers to a tube configured to be connected to an external coolant liquid supply system to allow the coolant to enter. The liquid outlet tube 612 refers to a tube configured to be connected to an external coolant liquid supply system to enable the coolant therein to flow back to the external coolant liquid supply system.

By allowing the liquid inlet tube 611 to be in communication with one end of the flow channel in the thermal management component and allowing the liquid outlet tube 612 to be in communication with the other end of the flow channel in the thermal management component, the coolant liquid can enter the thermal management component from the liquid inlet tube 611, and can flow out from the liquid outlet tube 612 after heat exchange in the thermal management component.

The liquid inlet tube 611 and the liquid outlet tube 612 are provided to enable connection to an external coolant liquid supply system, such that the coolant liquid flows through the thermal management component and thereby exchanges heat with the thermal management component to heat or cool the battery cell 100.

In some embodiments, the thermal management component includes a first extending part 620. The first extending part 620 extends out of the case 200 from one end of the case 200 in the height direction, and the liquid inlet tube 611 and the liquid outlet tube 612 are mounted on the first extending part 620.

The first extending part 620 refers to a structure corresponding to the part of the thermal management component that extends outward, and the first extending part is provided therein with at least two flow channels spaced apart from each other. As the liquid inlet tube 611 and the liquid outlet tube 612 are mounted on the first extending part 620, the flow channel connected to the liquid inlet tube 611 and the flow channel connected to the liquid outlet tube 612 are spaced apart from each other, preventing the cross-flowing of the coolant liquid in the first extending part 620.

The case 200 includes a plurality of frames 202 and two sealing plates lidding two ends of the frames 202. The sealing plate is a platy member covering an end part of the frame 202. The frames 202 may constitute the side walls of the case 200, the sealing plate located at the top of the case 200 constitutes the cover plate 22 of the case 200, and the sealing plate located at the bottom of the case 200 constitutes a bottom plate 25 of the case 200.

The first extending part 620 extending out of the case 200 from one end of the case 200 in the height direction means that the first extending part 620 extends out of the case 200 from the space between the frame 202 of the case 200 and the corresponding sealing plate. This structure not only facilitates the first extending part 620 extending out of the case 200 and facilitates the assembly, but also eliminates the need to provide a hole or window structure on the frame 202 of the case 200, thus facilitating the processing and manufacturing of the frame 202, and also avoiding reducing the structural strength of the case 200 to a certain extent.

The first extending part 620 is arranged on the thermal management component, the liquid inlet tube 611 and the liquid outlet tube 612 are mounted on the first extending part 620 to support the liquid inlet tube 611 and the liquid outlet tube 612 through the first extending part 620, the first extending part 620 extends out of the case 200 from one end of the case 200 in the height direction, and the first extending part 620 can be conveniently arranged outside the case 200 without providing an opening structure on the case 200, such that the liquid inlet tube 611 and the liquid outlet tube 612 can be led out of the case to facilitate the connection of the liquid inlet tube 611 and the liquid outlet tube 612 to an external coolant liquid supply system.

In some embodiments, the case 200 includes a plurality of frames 202 and two sealing plates lidding two ends of the frames 202. The sealing plate is a platy member covering an end part of the frame 202. The frames 202 may constitute the side walls of the case 200, the sealing plate located at the top of the case 200 constitutes the cover plate 22 of the case 200, and the sealing plate located at the bottom of the case 200 constitutes a bottom plate 25 of the case 200.

In some embodiments, the case 200 includes a sealing plate located at an end part of the case in the height direction Z. The sealing plate is located at one end of the case 200 proximal to the first extending part 620, the sealing plate is provided with an outwardly extending second extending part 221, and the first extending part 620 is in sealing connection with the second extending part 221.

The second extending part 221 refers to a part of the sealing plate that protrudes and extends outward.

The first extending part 620 is in sealing connection with the second extending part 221 to support and protect the first extending part 620 through the second extending part 221, which facilitates the sealing of the case 200.

By providing the second extending part 221 on the sealing plate of the case 200, not only the first extending part 620 can be supported through the second extending part 221, but also the first extending part 620 can be protected and the sealing connection of the case 200 is facilitated.

In some embodiments, the first extending part 620 may be provided on the first thermal management component 310. The first extending part 620 may also be provided on the second thermal management component 320. The first extending part 620 may also be provided on both the first thermal management component 310 and the second thermal management component 320.

In some embodiments, when the first extending part 620 is located at the top of the case 200, the sealing plate may be the cover plate 22 of the case 200.

In some embodiments, when the first extending part 620 is located at the bottom of the case 200, the sealing plate may be the bottom plate 25 of the case 200.

In some embodiments, the first extending part 620 and the first thermal management component 310 are of an integrated structure.

The first extending part 620 and the first thermal management component 310 being of an integrated structure means that the first extending part 620 and the first thermal management component 310 are integrally formed. This can facilitate communication between the flow channel in the first extending part 620 and the flow channel in the first thermal management component 310.

Configuring the first extending part 620 and the first thermal management component 310 as an integrated structure not only facilitates the processing and manufacturing, but also facilitates the assembly.

In some embodiments, the first extending part 620 may also be manufactured separately and then fixed to the case 200 or the first thermal management component 310.

In some embodiments, the first extending part 620 and the second thermal management component 320 are of an integrated structure.

The first extending part 620 and the second thermal management component 320 being of an integrated structure means that the first extending part 620 and the second thermal management component 320 are integrally formed. This can facilitate communication between the flow channel in the first extending part 620 and the flow channel in the second thermal management component 320.

Configuring the first extending part 620 and the second thermal management component 320 as an integrated structure not only facilitates the processing and manufacturing, but also facilitates the assembly.

In some embodiments, the thermal management component includes a first thermal management component 310, a liquid inlet tube 611 and a liquid outlet tube 612 are mounted on the case 200, the liquid inlet tube 611 is in communication with one end of the flow channel in the first thermal management component 310, and the liquid outlet tube 612 is in communication with the other end of the flow channel in the first thermal management component 310.

In some embodiments, the thermal management component includes a second thermal management component 320, a liquid inlet tube 611 and a liquid outlet tube 612 are mounted on the case 200, the liquid inlet tube 611 is in communication with one end of the flow channel in the second thermal management component 320, and the liquid outlet tube 612 is in communication with the other end of the flow channel in the second thermal management component 320.

In some embodiments, the thermal management component includes a third thermal management component 330, a liquid inlet tube 611 and a liquid outlet tube 612 are mounted on the case 200, the liquid inlet tube 611 is in communication with one end of the flow channel in the third thermal management component 330, and the liquid outlet tube 612 is in communication with the other end of the flow channel in the third thermal management component 330.

In some embodiments, the thermal management component includes a third thermal management component 330. A liquid inlet tube 611 and a liquid outlet tube 612 are mounted on the case 200, the battery 1001 further includes a liquid distribution tube 631 connected to one end of the flow channel of each third thermal management component 330 and a liquid return tube 632 connected to the other end of the flow channel of each third thermal management component 330, the liquid inlet tube 611 is in communication with the liquid distribution tube 631, and the liquid outlet tube 612 is in communication with the liquid return tube 632.

In some embodiments, the thermal management component includes a first thermal management component 310 and a second thermal management component 320, and a liquid inlet tube 611 and a liquid outlet tube 612 are mounted on the case 200. The liquid inlet tube 611 is connected to both one end of the flow channel in the first thermal management component 310 and one end of the flow channel in the second thermal management component 320, and the liquid outlet tube 612 is connected to both the other end of the flow channel in the first thermal management component 310 and the other end of the flow channel in the second thermal management component 320, so as to supply the coolant liquid to the first thermal management component 310 and the second thermal management component 320. In addition, this can reduce the number of tubes and improve the integration.

In some embodiments, the first thermal management component 310 and the second thermal management component 320 may also enable the entering and exiting of the coolant liquid through different liquid inlet tubes 611 and liquid outlet tubes 612. That is, one set of liquid inlet tube 611 and liquid outlet tube 612 may be arranged to be connected to the first thermal management component 310, and another set of liquid inlet tube 611 and liquid outlet tube 612 may be arranged to be connected to the second thermal management component 320.

In some embodiments, the first thermal management component 310 and the second thermal management component 320 are connected in parallel through tubes, and the first extending part 620 is in communication with the first thermal management component 310 and thereby in communication with the second thermal management component 320. The first thermal management component 310 and the second thermal management component 320 being connected in parallel through tubes means that one end of the flow channel of the first thermal management component 310 is connected to one end of the flow channel of the second thermal management component 320, and the other end of the flow channel of the first thermal management component 310 is connected to the other end of the flow channel of the second thermal management component 320.

Referring to FIGs. 20 and 21, in some embodiments, the thermal management component includes a first thermal management component 310 and a third thermal management component 330, and a liquid inlet tube 611 and a liquid outlet tube 612 are mounted on the case 200. The battery 1001 further includes a liquid distribution tube 631 connected to one end of the flow channel of each third thermal management component 330 and a liquid return tube 632 connected to the other end of the flow channel of each third thermal management component 330, the liquid inlet tube 611 is connected to both one end of the flow channel in the first thermal management component 310 and the liquid distribution tube 631, and the liquid outlet tube 612 is connected to both the other end of the flow channel in the first thermal management component 310 and the liquid return tube 632, so as to supply the coolant liquid to the first thermal management component 310 and the second thermal management component 320. In addition, this can reduce the number of tubes and improve the integration.

In some embodiments, the first thermal management component 310 and the third thermal management component 330 may also enable the entering and exiting of the coolant liquid through different liquid inlet tubes 611 and liquid outlet tubes 612. That is, one set of liquid inlet tube 611 and liquid outlet tube 612 may be arranged to be connected to the first thermal management component 310, and another set of liquid inlet tube 611 and liquid outlet tube 612 may be arranged to be connected to the third thermal management component 330.

In some embodiments, the first thermal management component 310 and the third thermal management component 330 are connected in parallel through tubes, and the first extending part 620 is in communication with the first thermal management component 310 and thereby in communication with the third thermal management component 330. The first thermal management component 310 and the third thermal management component 330 being connected in parallel through tubes means that one end of the flow channel of the first thermal management component 310 is connected to one end of the flow channel of the third thermal management component 330, and the other end of the flow channel of the first thermal management component 310 is connected to the other end of the flow channel of the third thermal management component 330.

Referring to FIG. 23, in some embodiments, the thermal management component includes a second thermal management component 320 and a third thermal management component 330, and a liquid inlet tube 611 and a liquid outlet tube 612 are mounted on the case 200. The battery 1001 further includes a liquid distribution tube 631 connected to one end of the flow channel of each third thermal management component 330 and a liquid return tube 632 connected to the other end of the flow channel of each third thermal management component 330, the liquid inlet tube 611 is connected to both one end of the flow channel in the second thermal management component 320 and the liquid distribution tube 631, and the liquid outlet tube 612 is connected to both the other end of the flow channel in the second thermal management component 320 and the liquid return tube 632, so as to supply the coolant liquid to the second thermal management component 320 and the second thermal management component 320. In addition, this can reduce the number of tubes and improve the integration.

In some embodiments, the second thermal management component 320 and the third thermal management component 330 may also enable the entering and exiting of the coolant liquid through different liquid inlet tubes 611 and liquid outlet tubes 612. That is, one set of liquid inlet tube 611 and liquid outlet tube 612 may be arranged to be connected to the second thermal management component 320, and another set of liquid inlet tube 611 and liquid outlet tube 612 may be arranged to be connected to the third thermal management component 330.

In some embodiments, the second thermal management component 320 and the third thermal management component 330 are connected in parallel through tubes, and the first extending part 620 is in communication with the second thermal management component 320 and thereby in communication with the third thermal management component 330. The second thermal management component 320 and the third thermal management component 330 being connected in parallel through tubes means that one end of the flow channel of the second thermal management component 320 is connected to one end of the flow channel of the third thermal management component 330, and the other end of the flow channel of the second thermal management component 320 is connected to the other end of the flow channel of the third thermal management component 330.

Referring to FIG. 24, in some embodiments, the thermal management component includes a first thermal management component 310, a second thermal management component 320, and a third thermal management component 330. The temperature of the battery cell 100 may be regulated by the first thermal management component 310, the second thermal management component 320, and the third thermal management component 330 simultaneously, so as to provide a more stable temperature environment for the battery cell 100, thereby facilitating the stable charging and discharging of the battery cell 100.

Referring to FIG. 24, FIG. 24 is a schematic diagram of an exploded structure of a battery 1001 according to some embodiments of the present application. In some embodiments, when the thermal management component of the battery 1001 includes a first thermal management component 310, a second thermal management component 320, and a plurality of third thermal management components 330, the second thermal management component 320 is connected in parallel with the first thermal management component 310 through a tube. A liquid inlet tube 611 is in communication with both the first thermal management component 310 and a liquid distribution tube 631, and a liquid outlet tube 612 is in communication with both the first thermal management component 310 and a liquid return tube 632. In this way, the first thermal management component 310, the second thermal management component 320, and the plurality of third thermal management components 330 are all arranged in parallel. The coolant liquid is supplied to the first thermal management component 310, the second thermal management component 320, and each third thermal management component 330 through one liquid inlet tube 611, and the coolant liquid in the first thermal management component 310, the second thermal management component 320, and each third thermal management component 330 is returned through one liquid outlet tube 612, thus reducing the use of tubes and improve the integration.

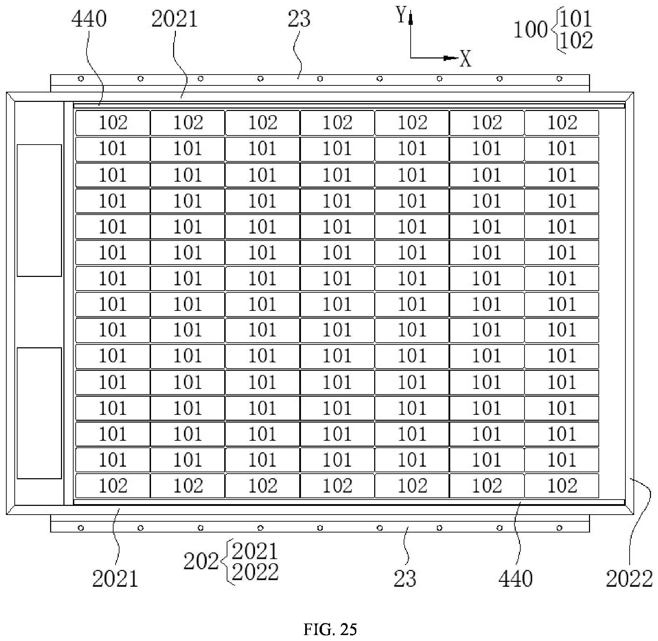

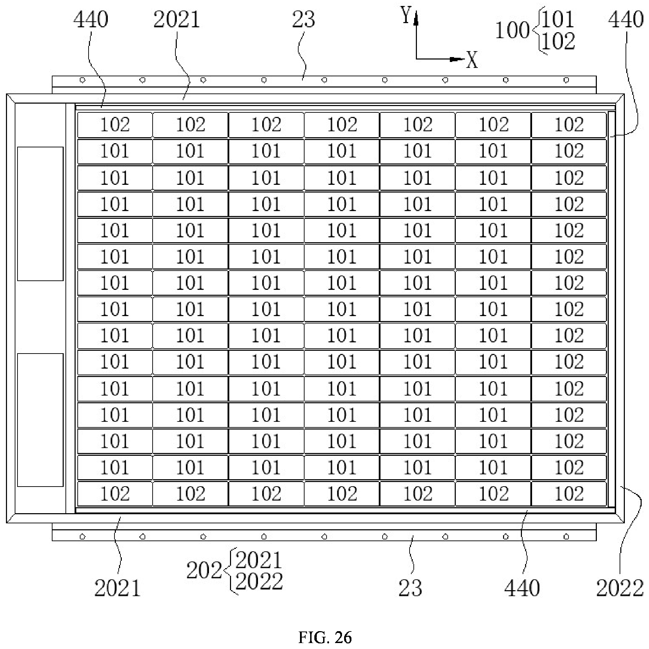

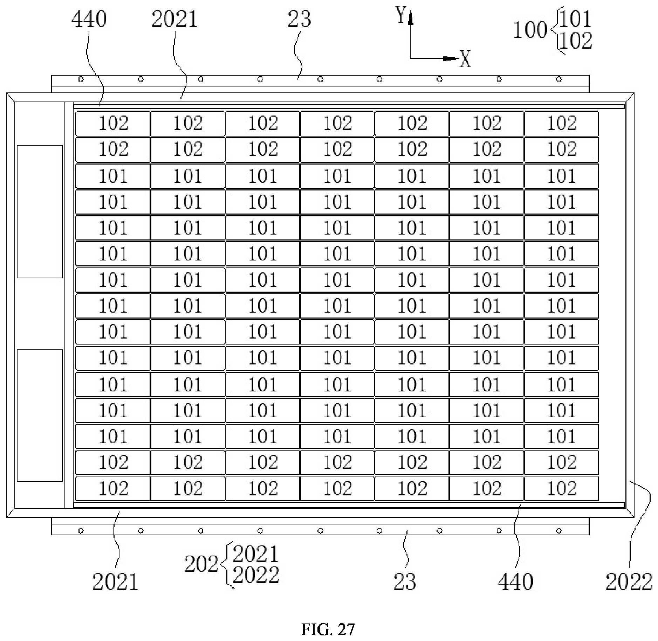

Referring to FIGs. 25 to 27, FIG. 25 is a schematic structural diagram showing the distribution of battery cells 100 in a case 200 according to some embodiments of the present application. FIG. 26 is a schematic structural diagram showing the distribution of battery cells 100 in a case 200 according to some other embodiments of the present application. FIG. 27 is a schematic structural diagram showing the distribution of battery cells 100 in a case 200 according to still some embodiments of the present application.

In some embodiments, the plurality of battery cells 100 include type-I battery cells 101 and type-II battery cells 102, at least the battery cells 100 abutting against the frames 202 of the case 200 are the type-II battery cells 102, and the energy density of the type-II battery cell 102 is greater than the energy density of the type-I battery cell 101.

The energy density of the battery cell 100 may be the volumetric energy density or the gravimetric energy density. In the embodiments of the present application, the energy density of the type-II battery cell 102 is greater than the energy density of the type-I battery cell 101. In an example, the volumetric energy density E1 of the type-I battery cell 101 may be in a range of, for example, 200 Watt-hours per liter (Wh/L) to 450 Wh/L, such as 200 Wh/L, 250 Wh/L, 300 Wh/L, 350 Wh/L, 400 Wh/L, or 450 Wh/L. In an example, the volumetric energy density E2 of the type-II battery cell 102 may be in a range of, for example, 450 Wh/L to 750 Wh/L, such as 450 Wh/L, 500 Wh/L, 550 Wh/L, 600 Wh/L, 620 Wh/L, 700 Wh/L, or 750 Wh/L. In an example, the gravimetric energy density G1 of the type-I battery cell 101 may be in a range of, for example, 100 Watt-hours per kilogram (Wh/Kg) to 220 Wh/Kg, such as 100 Wh/Kg, 120 Wh/Kg, 140 Wh/Kg, 160 Wh/Kg, 180 Wh/Kg, 200 Wh/Kg, or 220 Wh/Kg. In an example, the gravimetric energy density G2 of the type-II battery cell 102 may be in a range of, for example, 220 Wh/Kg to 350 Wh/Kg, such as 220 Wh/Kg, 240 Wh/Kg, 260 Wh/Kg, 280 Wh/Kg, 300 Wh/Kg, 320 Wh/Kg, or 350Wh/Kg. In general, when the battery 1001 operates in a low-temperature environment, for example, when the ambient temperature is -20 °C, the charging and discharging performance of the battery cell 100 with high energy density is better than that of the battery cell 100 with low energy density.

In a low-temperature environment, the heat of the battery cell 100 will dissipate from the case 200, and the heat of the battery cells 100 abutting against the frames 202 is more easily absorbed by the frames 202. As a result, the temperature of the region close to the frames 202 will be relatively lower, subjecting the battery cells 100 close to the frames 202 to a more significant impact from the low-temperature environment. By using the type-II battery cells 102 as the battery cells 100 abutting against the frames 202, the energy density of the battery cells 100 close to the frames 202 is higher, and thus the impact of the low-temperature environment on these battery cells is small, thereby effectively improving the heat preservation performance and charging and discharging performance of the battery 1001 at a low temperature, ameliorating the temperature difference, and well balancing the cost and capacity of the battery 1001.

The low-temperature environment refers to a relatively low ambient temperature in which the battery cells 100 operate. For example, a temperature of 5 °C and below may be referred to as a low-temperature environment. For example, a temperature environment of -30 °C and below, - 20 °C and below, -10 °C and below, -5 °C and below, 0 °C and below, and the like is a low-temperature environment.

The type-II battery cells 102 are used as the battery cells 100 abutting against the frames 202. Since the type-IIbattery cell 102 has a greater energy density, the type-II battery cell can have better charging and discharging performance at a low temperature, thereby effectively improving the heat preservation performance and charging and discharging performance of the battery 1001 at a low temperature, and ameliorating the temperature difference.

In one embodiment of the present application, the type-I battery cell 101 may be a sodium-ion chemical system battery cell, which is also referred to as a sodium-ion battery cell. The positive electrode material of the sodium-ion chemical system battery cell is a sodium-containing positive electrode active material, including at least one of a sodium-containing positive electrode active material with a layered structure, a sodium-containing positive electrode active material with a spinel structure, or a sodium-containing positive electrode active material with an olivine structure. The sodium-ion chemical system battery cell includes, but is not limited to, battery cells of a Prussian blue derivative/hard carbon system, a polyanionic fast-ionic conductor sodium vanadium phosphate (or vanadium sodium fluorophosphate or vanadium sodium oxyfluorophosphate)/hard carbon system, a transition metal oxide/hard carbon system, and the like. The sodium-containing positive electrode active material includes at least one of a sodium-containing transition metal oxide, a sodium-containing polyanionic compound, or a sodium-containing Prussian blue material. The type-II battery cell 102 may be a lithium-ion chemical system battery cell, which is also referred to as a lithium-ion battery cell. The positive electrode material of the lithium-ion chemical system battery cell is a lithium-containing positive electrode active material, including at least one of a lithium-containing positive electrode active material with a layered structure, a lithium-containing positive electrode active material with a spinel structure, or a lithium-containing positive electrode active material with an olivine structure. The lithium-ion chemical system battery cell may be a battery cell using a lithium-containing active substance with an olivine structure as the main positive electrode material (e.g., lithium iron phosphate or lithium manganese iron phosphate), a battery cell using a lithium-containing active substance with a layered structure as the main positive electrode material (e.g., lithium cobaltate, lithium nickelate, a lithium-rich material, a nickel-cobalt-manganese ternary material, and a manganese-cobalt-aluminum ternary material), or the like. In another embodiment of the present application, the type-I battery cell 101 may be a battery cell using a lithium-containing active substance with an olivine structure as the main positive electrode material (e.g., lithium iron phosphate or lithium manganese iron phosphate), and the type-II battery cell 102 may be a battery cell using a lithium-containing active substance with a layered structure as the main positive electrode material (e.g., lithium cobaltate, lithium nickelate, a lithium-rich material, a nickel-cobalt-manganese ternary material, and a manganese-cobalt-aluminum ternary material).

In some embodiments, the positive electrode material of the type-I battery cell 101 includes a sodium-containing positive electrode active material; that is, the type-I battery cell 101 is a sodium-ion chemical system battery cell. The positive electrode material of the type-II battery cell 102 includes a lithium-containing positive electrode active material; that is, the type-II battery cell 102 is a lithium-ion chemical system battery cell. Thus, the energy density of the applied type-I battery cell 101 is less than the energy density of the type-II battery cell 102.

In some embodiments, the positive electrode material of the type-I battery cell 101 includes a lithium-containing positive electrode active material with an olivine structure, and the positive electrode material of the type-II battery cell 102 includes a lithium-containing positive electrode active material with a layered structure, such that the energy density of the applied type-I battery cell 101 is less than the energy density of the type-II battery cell 102.

In some embodiments, the lithium-containing positive electrode active material with a layered structure includes at least one of lithium cobaltate, lithium nickelate, a lithium-rich material, a nickel-cobalt-manganese ternary material, and a manganese-cobalt-aluminum ternary material. The lithium-containing positive electrode active material with an olivine structure includes at least one of lithium iron phosphate and lithium manganese iron phosphate.

In some embodiments, the type-I battery cell 101 is a sodium-ion battery cell, and the type-II battery cell 102 is a lithium-ion battery cell; or the type-I battery cell 101 is a lithium iron phosphate battery cell, and the type-II battery cell 102 is a ternary battery cell; or the type-I battery cell 101 is a liquid-state electrolytic solution battery cell, and the type-II battery cell 102 is a gel-state electrolytic solution battery cell or/and a solid-state battery cell; or the type-I battery cell 101 is a gel-state electrolytic solution battery cell, and the type-II battery cell 102 is a solid-state battery cell.

The gel state refers to an elastic semi-solid state having a certain fixed structure and certain elasticity and deformability. Compared with the liquid state, the gel state has a lower degree of freedom and can reduce the probability of movement between the electrode assembly and the inner wall of the shell.

The lithium-ion battery cell means that the positive electrode active material includes lithium. The lithium-containing positive electrode active material includes at least one of a lithium-containing positive electrode active material with a layered structure, a lithium-containing positive electrode active material with a spinel structure, or a lithium-containing positive electrode active material with an olivine structure.

The lithium-containing positive electrode active material with a layered structure includes at least one of lithium cobaltate, lithium nickelate, a lithium-rich material, a nickel-cobalt-manganese ternary material, and a manganese-cobalt-aluminum ternary material.

The lithium-containing positive electrode active material with a spinel structure includes lithium manganate.

The lithium-containing positive electrode active material with an olivine structure includes at least one of lithium iron phosphate and lithium manganese iron phosphate.

The lithium iron phosphate battery cell refers to a battery cell 100 in which the positive electrode active substance of the electrode plate in the battery cell 100 is lithium iron phosphate.

The ternary battery cell is also called a ternary lithium battery cell, which refers to a battery cell 100 in which the positive electrode active substance of the electrode plate in the battery cell 100 is a lithium-containing ternary positive electrode active material. The lithium-containing ternary positive electrode active material includes at least one of lithium cobaltate, lithium nickelate, a lithium-rich material, a nickel-cobalt-manganese ternary material, and a manganese-cobalt-aluminum ternary material.

The sodium-ion battery cell refers to a battery cell 100 that operates by relying on the movement of sodium ions between the positive electrode and the negative electrode.

The liquid-state electrolytic solution battery cell refers to a battery cell 100 formed by using a liquid-state electrolytic solution.

The gel-state battery cell refers to a battery cell 100 using a gel-state electrolytic solution.

The solid-state battery cell is a battery cell 100 using a solid electrode and a solid electrolytic solution.

Generally, the energy density of the lithium-ion battery cell is greater than the energy density of the sodium-ion battery cell. The energy density of the ternary battery cell is greater than the energy density of the lithium iron phosphate battery cell. The energy density of the solid-state battery cell is greater than the energy density of the gel-state electrolytic solution battery cell, and the energy density of the gel-state battery cell is greater than the energy density of the liquid-state electrolytic solution battery cell.

By selecting the type-I battery cell 101 and the type-IIbattery cell 102 as described above, the energy density of the selected type-II battery cell 102 can be better made greater than the energy density of the type-I battery cell 101, so as to improve the overall heat preservation performance, charging and discharging performance, and energy density of the battery 1001 at a low temperature.

In some embodiments, the total capacity of the type-II battery cells 102 is less than the total capacity of the type-I battery cells 101.

The capacity of the battery cell 100 refers to the amount of electric charge that the battery cell 100 can store, and is generally expressed in ampere-hour (Ah) or milliampere-hour (mAh). The greater the capacity, the higher the current and longer the usage time that the battery cell 100 can provide.

The total capacity of the type-II battery cells 102 refers to the sum of the capacities of all the type-II battery cells 102 in the case 200.

The total capacity of the type-I battery cells 101 refers to the sum of the capacities of all the type-I battery cells 101 in the case 200.

By making the total capacity of the type-II battery cells 102 relatively small, the type-I battery cells 101 in the battery 1001 can serve as the main workhorse for charging and discharging, thereby reducing the cost.

In some embodiments, the number of the type-I battery cells 101 is greater than the number of the type-II battery cells 102.

The number of the type-I battery cells 101 is greater than the number of the type-II battery cells 102, such that the total capacity of the type-I battery cells 101 is made larger, and the type-I battery cells 101 are thus the main workhorse for charging and discharging of the battery 1001, thereby reducing the cost.

In some embodiments, the type-II battery cells 102 are connected in series with the type-I battery cells 101, and the capacity of a single type-II battery cell 102 is greater than the capacity of a single type-I battery cell 101.

The larger the capacity of the battery cell 100, the larger the charging and discharging current thereof. Among the battery cells 100 connected in series, the battery cells 100 with a small capacity also have a small charging and discharging current, and the battery cells 100 with a small charging and discharging current will become a bottleneck that limits the overall charging and discharging of these battery cells 100 connected in series. That is, the battery cells 100 with a small capacity will affect the overall charging and discharging performance of the battery cells 100 connected in series. The type-I battery cells 101 in the case 200 are the main workhorse for charging and discharging of the battery 1001. Therefore, by making the capacity of a single type-II battery cell 102 greater than the capacity of a single type-I battery cell 101, the probability that the type-II battery cells 102 become the bottleneck that limits the charging and discharging performance of the battery cells 100 connected in series can be reduced, so as to improve the overall charging and discharging performance of the battery 1001.

In some embodiments, a heat preservation layer 440 is disposed between the type-II battery cell 102 and the adjacent frame 202.

The heat preservation layer 440 refers to a structural member with thermal insulation performance. The heat preservation layer 440 may be a platy member, a coating disposed on the frame 202, or other structures. The heat preservation layer 440 may be an aerogel thermal insulation pad, a ceramic thermal insulation pad, an epoxy resin plate, or other structural members.

Since the type-II battery cell 102 abuts against the frame 202 and is closer to the frame 202, providing the heat preservation layer 440 between the type-II battery cell 102 and the frame 202 can better reduce the rate at which the heat of the type-II battery cell 102 is conducted to the frame 202 in a low-temperature environment, so as to improve the heat preservation performance and charging and discharging performance of the battery 1001 at a low temperature.

In some embodiments, the plurality of battery cells 100 are arranged in columns along the length direction X of the case 200 and arranged in rows along the width direction Y of the case 200, and the frame 202 includes a first frame 2021 arranged along the length direction X of the case 200 and a second frame 2022 arranged along the width direction Y of the case 200. At least one column of battery cells 100 adjacent to the first frame 2021 are the type-II battery cells 102, and/or at least one row of battery cells 100 abutting against and adjacent to the second frame 2022 are the type-II battery cells 102.

The plurality of battery cells 100 being arranged in columns along the length direction X of the case 200 and arranged in rows along the width direction Y of the case 200 means that a plurality of battery cells 100 are arranged in columns along the length direction X of the case 200 and a plurality of battery cells 100 are arranged in rows along the width direction Y of the case 200, such that the plurality of battery cells 100 are arranged in an array to facilitate the mounting and arrangement of the battery cells 100.

Since the battery cells 100 in one column are sequentially arranged along the length direction X of the case 200, the at least one column of battery cells 100 adjacent to the first frame 2021 refer to at least one column of battery cells 100 that are adjacent to the first frame 2021. In some embodiments, some battery cells 100 will abut against one second frame 2022 of the case 200, the at least one row of battery cells 100 adjacent to the second frame 2022 refer to at least one row of battery cells 100 that are adjacent to the second frame 2022.

By allowing at least one column of battery cells 100 adjacent to the first frame 2021 to be the type-II battery cells 102 and/or at least one row of battery cells 100 adjacent to the second frame 2022 to be the type-II battery cells 102, the heat preservation performance and charging and discharging performance of the battery 1001 at a low temperature can be effectively improved, and the temperature difference can be ameliorated.

In some embodiments, among the battery cells 100 abutting against the first frame 2021, one column of battery cells 100 close to the frame 202 are the type-II battery cells 102; that is, one column of battery cells 100 close to the first frame 2021 are the type-II battery cells 102. This can allow the number of the type-II battery cells 102 to be made small to reduce the overall cost of the battery 1001.

In some embodiments, among the battery cells 100 abutting against the first frame 2021, two columns of battery cells 100 close to the first frame 2021 are the type-II battery cells 102; that is, two columns of battery cells 100 close to the first frame 2021 are the type-II battery cells 102. This can improve the heat preservation performance and charging and discharging performance of the battery 1001 at a low temperature. It can be understood that, among the battery cells 100 abutting against the first frame 2021, three, four, or more columns of battery cells 100 close to the first frame 2021 may also be the type-II battery cells 102. This can improve the heat preservation performance and charging and discharging performance of the battery 1001 at a low temperature.

In some embodiments, among the battery cells 100 abutting against the second frame 2022, one row of battery cells 100 close to the second frame 2022 are the type-II battery cells 102. This can allow the number of the type-II battery cells 102 to be made small to reduce the overall cost of the battery 1001.

In some embodiments, among the battery cells 100 abutting against the second frame 2022, two rows of battery cells 100 close to the second frame 2022 are the type-II battery cells 102. This can improve the heat preservation performance and charging and discharging performance of the battery 1001 at a low temperature. It can be understood that, among the battery cells 100 abutting against the second frame 2022, three, four, or more rows of battery cells 100 close to the second frame 2022 may also be the type-II battery cells 102. This can improve the heat preservation performance and charging and discharging performance of the battery 1001 at a low temperature.

In some embodiments, among the battery cells 100 abutting against the frame 202, in the case that the large surfaces (the second side surfaces 122) of these battery cells 100 are parallel to the frame 202, one, two, or three columns of battery cells 100 adjacent to the frame 202 may be the type-II battery cells 102, so as to balance the cost of the battery 1001 and the heat preservation performance and charging and discharging performance of the battery 1001 at a low temperature, such that the battery 1001 features good heat preservation performance and charging and discharging performance at a low temperature and low price cost.

Referring to FIG. 25, when the type-II battery cells 102 abut against the frames 202 on the opposite sides of the case 200, a heat preservation layer 440 is provided between the type-II battery cells 102 and the frames 202. For example, when the type-II battery cells 102 abut against the first frames 2021, a heat preservation layer 440 is provided between the type-II battery cells 102 and the first frames 2021.

Referring to FIG. 26, when the type-II battery cells 102 abut against the frames 202 on three adjacent sides of the case 200, a heat preservation layer 440 is provided between the type-II battery cells 102 and the three frames 202. For example, when the type-II battery cells 102 abut against the first frames 2021, a heat preservation layer 440 is provided between the type-II battery cells 102 and the first frames 2021. The type-II battery cells 102 abut against the second frame 2022, and a heat preservation layer 440 is also provided between the type-II battery cells 102 and the second frame 2022.

In some embodiments, when there are a plurality of (two or more) frames 202 abutting against the type-II battery cells 102, the heat preservation layer 440 may also be provided only between one of the frames 202 and the adjacent type-II battery cells 102.

In some embodiments, when the heat preservation layer 440 has an insulation property, the heat preservation layer 440 may also be used as the insulating guard plate 410.

According to some embodiments of the present application, the present application provides a battery 1001. The battery includes a case 200, a plurality of battery cells 100, and a second thermal management component 320. The battery cells 100 and the second thermal management component 320 are mounted in the case 200 to protect the battery cells 100 and the second thermal management component 320 through the case 200. The case 200 includes first frames 2021 at two ends in the width direction, each first frame 2021 extends along the length direction of the case 200, the length direction of each battery cell 100 is parallel to the length direction of the case 200, and the battery cells 100 adjacent to the first frames 2021 abut against the first frames 2021; each first frame 2021 is provided with a load-bearing beam 23. One end of the battery cell 100 along the height direction has a second end surface 112, and each second end surface 112 is connected to the second thermal management component 320. By allowing the length direction of the battery cell 100 to be parallel to the length direction of the case 200, allowing the first frames 2021 to abut against the adjacent battery cells 100, and allowing the first frames 2021 to be located at the end parts of the case 200 in the width direction, the first frames 2021 abut against the large surfaces of the adjacent battery cells 100. By providing the load-bearing beam 23 on the first frame 2021, the mounting and use of the battery 1001 is facilitated, and a constraining force can be provided by the load-bearing beam 23 to resist the expansion and deformation of the battery cells 100. In addition, by providing the second thermal management component 320 and connecting it to the second end surface 112, the battery cell 100 can be heated or cooled through the second thermal management component 320, such that the temperature environment of the battery cell 100 is stable.

According to some embodiments of the present application, the present application further provides an electric device. The electric device includes the battery 1001 described in any one of the above embodiments.

The electric device may be any one of the aforementioned devices or systems that use the battery 1001.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and they shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
a case comprising first frames at two ends in a width direction, each first frame extending along a length direction of the case; and
a plurality of battery cells mounted in the case, wherein
a length direction of each battery cell is parallel to the length direction of the case, and battery cells adjacent to the first frames abut against the first frames;
a load-bearing beam is disposed on each first frame.

2. The battery according to claim 1, wherein two ends of the battery cell along a height direction respectively have a first end surface and a second end surface, and the second end surface is adhesively connected to the case.

3. The battery according to claim 2, wherein the second end surface is fixedly connected to the case through a structural adhesive.

4. The battery according to claim 3, wherein the battery further comprises:
an adhesive blocking structure disposed around an edge of each second end surface and configured to prevent the structural adhesive on the second end surface from flowing into a gap between adjacent battery cells.

5. The battery according to claim 4, wherein the adhesive blocking structure comprises a ridge-like strip disposed on the case and/or the second end surface.

6. The battery according to any one of claims 1 to 5, wherein a thermal management component is mounted in the case, and the thermal management component is in heat conducting connection with the battery cell.

7. The battery according to claim 6, wherein one end of each battery cell along the height direction has a first end surface, and the first end surface is provided with an electrode terminal; the thermal management component comprises a first thermal management component, each first end surface is adhesively connected and fixed to the first thermal management component through a thermally conductive structural adhesive, and the first thermal management component is provided with first holes exposing the electrode terminals.

8. The battery according to claim 7, wherein the battery further comprises:
an adhesive stopping structure disposed around an edge of each first end surface;
the adhesive stopping structure is disposed between the battery cell and the first thermal management component.

9. The battery according to claim 8, wherein the adhesive stopping structure is further disposed around each first hole.

10. The battery according to claim 8 or 9, wherein the first end surface is provided with a pressure relief mechanism, the first thermal management component is provided with venting mechanisms respectively opposite to the pressure relief mechanisms, and the adhesive stopping structure is disposed around each venting mechanism.

11. The battery according to claim 10, wherein the venting mechanism is a second hole disposed on the first thermal management component, and an inner wall of the second hole is provided with an insulating layer.

12. The battery according to any one of claims 8 to 11, wherein the adhesive stopping structure comprises a rib-like strip disposed on the first thermal management component and/or the first end surface.

13. The battery according to any one of claims 7 to 12, wherein two opposite surfaces of the first thermal management component and an inner wall of the first hole are provided with an insulating layer.

14. The battery according to any one of claims 6 to 13, wherein one end of the battery cell along the height direction has the second end surface, the thermal management component comprises a second thermal management component, the second thermal management component is disposed in the case, and each second end surface is connected to the second thermal management component.

15. The battery according to any one of claims 6 to 14, wherein the plurality of battery cells are arranged in an array, the thermal management component comprises a third thermal management component configured to be suitably disposed between two adjacent columns or two adjacent rows of the battery cells, the battery cell comprises a plurality of surfaces, and the third thermal management component is in heat exchange connection with a surface with a largest area among the plurality of surfaces.

16. The battery according to claim 15, wherein
the third thermal management component is disposed between any two adjacent columns or any two adjacent rows of the battery cells; or
one side of each column of the battery cells is provided with the third thermal management component, and two adjacent third thermal management components are spaced apart with two columns of the battery cells therebetween; or
one side of each row of the battery cells is provided with the third thermal management component, and two adjacent third thermal management components are spaced apart with two rows of the battery cells therebetween.

17. The battery according to claim 15 or 16, wherein the battery further comprises a liquid distribution tube connected to one end of a flow channel of each third thermal management component and a liquid return tube connected to the other end of the flow channel of each third thermal management component.

18. The battery according to claim 17, wherein the liquid distribution tube and the liquid return tube are located at a same end of the third thermal management component.

19. The battery according to claim 18, wherein the third thermal management component is provided with two flow channel sets, one end of the third thermal management component is provided with a flow collecting member, and the flow collecting member is in communication with the two flow channel sets.

20. The battery according to claim 19, wherein the case is provided therein with a reinforcing beam, the reinforcing beam extends in a direction perpendicular to a length direction of the third thermal management component, the reinforcing beam is provided with an accommodating groove configured to accommodate the flow collecting member, and the flow collecting member is arranged in a corresponding accommodating groove.

21. The battery according to any one of claims 6 to 20, wherein a liquid inlet tube and a liquid outlet tube are mounted on the case, the liquid inlet tube is in communication with one end of a flow channel in the thermal management component, and the liquid outlet tube is in communication with the other end of the flow channel in the thermal management component.

22. The battery according to any one of claims 6 to 21, wherein the thermal management component comprises a first extending part, the first extending part extends out of the case from one end of the case in a height direction, and the liquid inlet tube and the liquid outlet tube are mounted on the first extending part.

23. The battery according to claim 22, wherein the case comprises a sealing plate located at an end part of the case in the height direction, the sealing plate is located at one end of the case proximal to the first extending part, the sealing plate is provided with an outwardly extending second extending part, and the first extending part is in sealing connection with the second extending part.

24. The battery according to any one of claims 1 to 23, wherein an insulating guard plate is disposed between at least one first frame and the battery cell.

25. An electric device, comprising the battery according to any one of claims 1 to 24.
